# EUROPÄISCHE PATENTSCHRIFT

(11) **EP 1 659 501 B1**
(45) Veröffentlichungstag und Bekanntmachung des Hinweises auf die Patenterteilung: **22.08.2007**
(21) Anmeldenummer: 05023999.5
(22) Anmeldetag: 21.09.1998
(51) Int. Cl.: G06F 15/02

(54) **Anzeigevorrichtung mit einer Schnittstelle im Drehgelenk**
Display device with an interface in the pivoting joint
Dispositif d'affichage avec une interface dans le joint pivotant

(30) Priorität: 19.09.1997 DE 19741453
(43) Veröffentlichungstag der Anmeldung: 24.05.2006
(62) Teilanmeldung aus: 98950065.7
(73) Patentinhaber: Rolus Borgward, Glenn, 80796 München (DE)
(72) Erfinder: Rolus Borgward, Glenn, 80796 München (DE)
(74) Vertreter: Grünecker, Kinkeldey, Stockmair & Schwanhäusser Anwaltssozietät

(56) Entgegenhaltungen:
- EP-A- 0 396 009
- DE-A1- 19 546 786
- US-A- 5 534 888

## Beschreibung

Die vorliegende Erfindung betrifft ein digitales Buch, d.h. eine mobile Anzeigevorrichtung, insbesondere zur Wiedergabe von Buch-, Zeitungs-, und Zeitschrifteninformationen und anderen Dokumentationen bzw. Publikationen in elektronischer bzw. digitaler Form mittels Text-, Grafik-, Foto- und/oder Video- und Audioinformationen zur Bedienung durch Laienanwender.

Der Papierverbrauch und die damit verbundene Nachfrage an Rohstoffen wachsen Jahr für Jahr an. Die stets wachsende Zahl der Bevölkerung und der immer größer werdende Informationsbedarf, aber auch der selbstauferlegte konkurrenzbedingte Kommunikationszwang verursachen eine sich explosionsartig ausbreitende Informationsflut, welche in immer kürzeren Abständen einen immensen Verbrauch an Papier bedingt, somit nicht nur die Umwelt belastet, sondern auch in Bezug auf Transport-, Lagerhaltungs- und Recyclingkosten sowie in Bezug auf die Bereitstellungsgeschwindigkeit von Publikationen einen wirtschaftlichen Nachteil mit sich bringt. Dank moderner Informationstechnologien ist es zwar möglich geworden, einen großen Teil der Informationen über Computer zu produzieren, diese über beispielsweise Internet, Online-Dienste oder Datenbanken anzubieten oder in Form von CDs zu vermarkten; jedoch können diese nur über PCs, Laptops und Notebooks vom Verbraucher konsumiert werden, was voraussetzt, dass zumindest einer der vorgenannten Computer angeschafft, notwendige Applikationen installiert, und ihre Anwendung beherrscht werden muß, bevor eine erste Publikation gelesen werden kann.

Vorgenannte Gründe und die damit verbunden Investitionskosten, der notwendige Zeitaufwand und das aus Sicht eines technischen Laien erforderliche Spezialwissen zur Installation und Bedienung von Hard- und Software machen es einem großem Teil der Bevölkerung schwer, den Vorteil elektronischer Publikationen zu nutzen. Aber auch ältere oder behinderte Menschen finden oft keinen Zugang zu Computern, da ohne Grundkenntnisse die Bedienung und Handhabung für einen Laien nicht oder nur schwer möglich ist oder die Komplexität der Benutzerschnittstellen diese Menschen überfordert.

Zudem weisen Laptops und Notebooks durch ihre diversen Laufwerke und Vielzahl von Ein- und Ausgabeschnittstellen für bestimmte Benutzungsfälle große Volumina und Gewichte auf und sind mit einer Tastatur für den gesamten jeweils betreffenden Zeichensatz sowie mit einem einzigen Bildschirm oder Display ausgestattet. Es gibt jedoch Anwendungsfälle, in denen einerseits die relativ aufwendige und flächenverbrauchende Tastatur unnötig ist und andererseits die nur durch einen einzigen Bildschirm zur Verfügung stehende Anzeige- oder Anzeige-/Bearbeitungsfläche in bestimmten Benutzungsfällen zu klein ist.

Laptops und Notebooks sind durch ihre Bestimmung als Arbeitswerkzeug und die damit verbundenen konstruktionsbedingten bzw. baulichen Merkmale primär kein ergonomisches, d.h. handliches und reduziert zu bedienendes Informationsmittel zur Aufnahme z.B. von schöngeistiger Literatur oder zum Lesen von Berichten, Artikeln, Reportagen und Nachrichten aus Zeitschriften und Zeitungen oder zum Studieren von Publikationen in entspannter Haltung oder in Situationen, wo keine Auflagefläche vorhanden ist. Aufwand und Zeit zur Bedienung stehen oft in keiner Relation zu den häufig spontanen Anforderungen, die vielfach auch noch kurzfristig zu erledigen sind, z.B. das Nachschlagen von Informationen aus einem Lexikon, einem Telefonbuch oder einer Fernsehzeitschrift.

Aus der Druckschrift US 5,534,888 A1 ist ein elektronisches Buch bekannt, welches zwei in der Art eines Buches aufklappbare Anzeigenteile sowie einen diese beiden Anzeigenteile verbindendes Mittelteil aufweist.

Eine einfache ergonomische und kompakte elektronische Vorrichtung als tatsächlicher Buch-, Zeitschrift- oder Zeitungsersatz für einen universellen Einsatz in unterschiedlichen Lebenssituationen, welche für technische Laien unkompliziert und komfortabel zu halten und zu bedienen ist und die gleichzeitig wenig optische Irritationen zum störungsfreien Lesen und Manipulieren unterschiedlichster Publikationen aufweist, ist bislang nicht bekannt. Das aus der Druckschrift US 5,534,888 bekannte elektronische Buch erfordert bei dem Gebrauch durch den Benutzer vielfach umständliche und zeitraubende komplizierte Bedienungsoperationen, da eine Vielzahl von ergonomisch unzweckmäßig angeordneten Tasten zu betätigen ist, deren Funktionalität vorgegeben ist und die den für die Anzeige zur Verfügung stehenden Raum beschneiden. Bei einem aus der Druckschrift US 5,534,888 bekannten elektronischen Buch erfolgt die Bedienung unter Zuhilfenahme eines Hilfsdisplays auf der Außenseite der Buchdeckel (Anzeigeelemente), was dazu führt, dass der Benutzer das elektronische Buch zuklappen muß, um bestimme Einstellungen vornehmen zu können. Desweiteren sind die Tasten nur einzeln zu bedienen. Auf der Rückseite des Mittelteils ist eine Vielzahl von elektrischen Verbindern angeordnet, die hinter Schutzklappen verborgen sind und die gegebenenfalls vom Benutzer mit technischen Kenntnissen identifiziert und durch Hochklappen der Schutzabdeckungen zugänglich gemacht werden müssen. Wenn an die Steckverbinder elektrische Leitungen angeschlossen sind, kann das elektronische Buch aus dem Stand der Technik nicht mehr am Buchrücken nach der Art eines Buches gehalten oder auf eine Unterlage gelegt werden.

Der Erfindung liegt daher die Aufgabe zu Grunde, ein digitales Buch der eingangs genannten Art zu schaffen, das gegenüber dem Stand der Technik trotz kompakter Bauweise zum einen eine wesentlich vergrößerte Anzeigefläche und zum anderen eine für den Computerlaien leicht verständliche, benutzerfreundliche und einfache Handhabungsmöglichkeit bietet, um ihn in die Lage zu versetzen, umfangreiche Literatur, z. B. wissenschaftliche Werke, Enzyklopädien oder auch schöngeistige Literatur lesen zu können, und um dem Benutzer somit auch gegenüber einem herkömmlichen voluminöseren und schwereren Buch den Vorteil zu bieten, beliebig viele Seiten über beispielsweise nur zwei digitale Buchseiten in handlicher Form zumindest lesen und/oder gegebenenfalls bearbeiten zu können. Dabei sind die Lese- und Sehgewohnheiten der konventionellen Buch-, Zeitschriften- und Zeitungsleser zu berücksichtigen, die die möglichst irritationsfreie Betrachtung der angezeigten Publikationen bzw. Dokumenteninformationen erwarten und die sich durch einen zu sehr an der Computertechnik orientierenden Eindruck abstoßen lassen, z.B. hinsichtlich bestimmter Formen von Bedienelementen oder aufgrund sonstiger Überforderung, wie es oft bei älteren Menschen oder technischen Laien vorkommt, die die Nutzung eines elektronischen bzw. digitalen Buches (einer mobilen digitalen Anzeigevorrichtung) ablehnen. Sicherzustellen ist dabei ein sicheres und ergonomisches Halten und Bedienen in unterschiedlichen Situationen, z.B. beim Gehen, beim Liegen oder wenn sonst keine Auflagefläche vorhanden ist, sowie eine einfache und verständliche Handhabung bei minimalen oder fehlenden Vorkenntnissen oder beispielsweise bei einer Behinderung. Dabei soll eine unkomplizierte und gleichbleibende Bedienung trotz unterschiedlicher Anwendungsmöglichkeiten und vielfältiger Aufgaben erzielt werden. Es wird bezweckt, eine schnelle und reduzierte Bedienung mit minimalen Haltungsänderungen beim Lesen zu ermöglichen.

Die der Erfindung zugrunde liegende Aufgabe wird gelöst durch die Gegenstände der unabhängigen Patentansprüche.

Vorteilhafte Weiterbildungen der Erfindung sind durch die in den Unteransprüchen angegebenen Merkmale gekennzeichnet.

Die digitale mobile Anzeigevorrichtung gemäß der vorliegenden Erfindung ist vorteilhaft, da sie eine reale Alternative zu einem herkömmlichen Buch darstellt, wobei in erster Linie die Seh- und Lesegewohnheiten des Benutzers vorausgesetzt werden und besondere technische (Computer-)Vorkenntnisse nicht erforderlich sind.

Durch die mobile Anzeigevorrichtung gemäß der Erfindung beziehungsweise ihren Weiterbildungen und Modifikationen wird zudem gegenüber dem bekannten Stand der Technik
a) die Lese- und/oder Bearbeitungsfläche durch die Bedienung mittels rückseitiger Bedienelemente vergrößert,
b) das Lesen von Seiten ohne störende Elemente, z.B. Menüleiste, Icons, Bedienelemente etc. wie bei einer herkömmlichen Buchseite ermöglicht, und
c) dieses Gerät ohne besondere Vorbereitungen in einer beliebigen Situation und in beliebiger Körperstellung, z. B. im Falle einer Bettlägerigkeit des Benutzers, benutzbar.

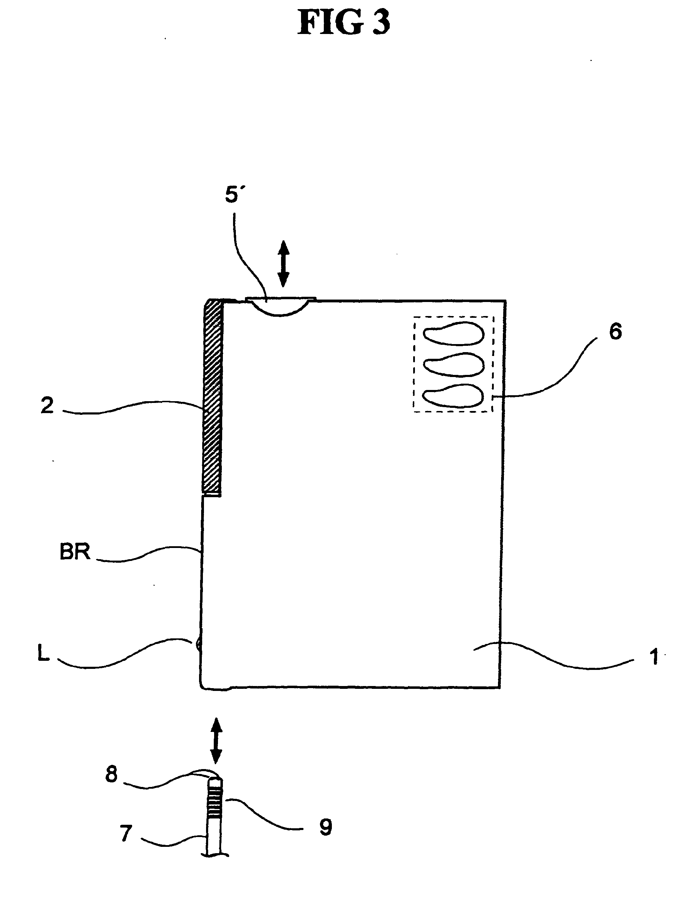

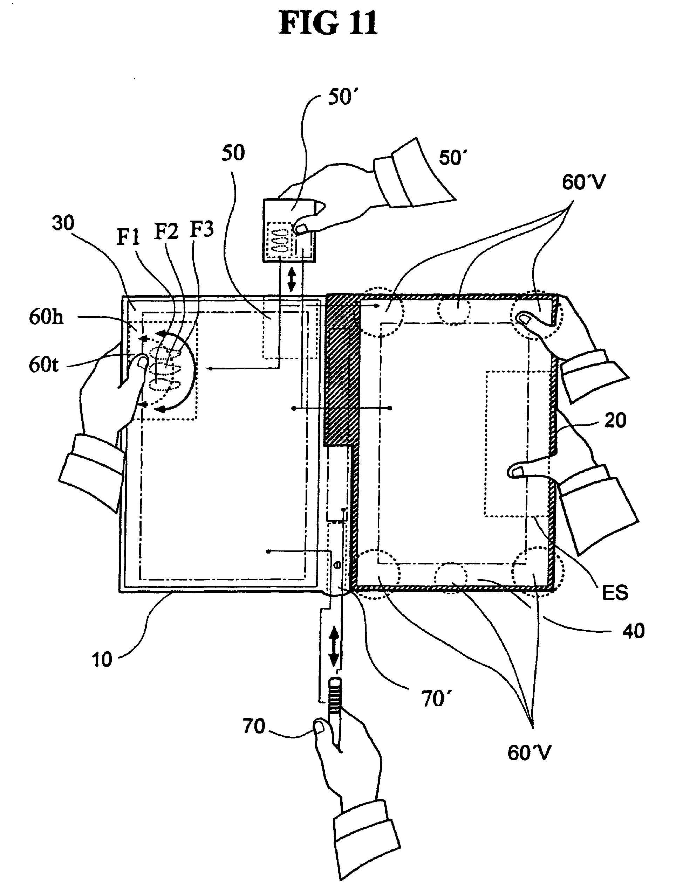

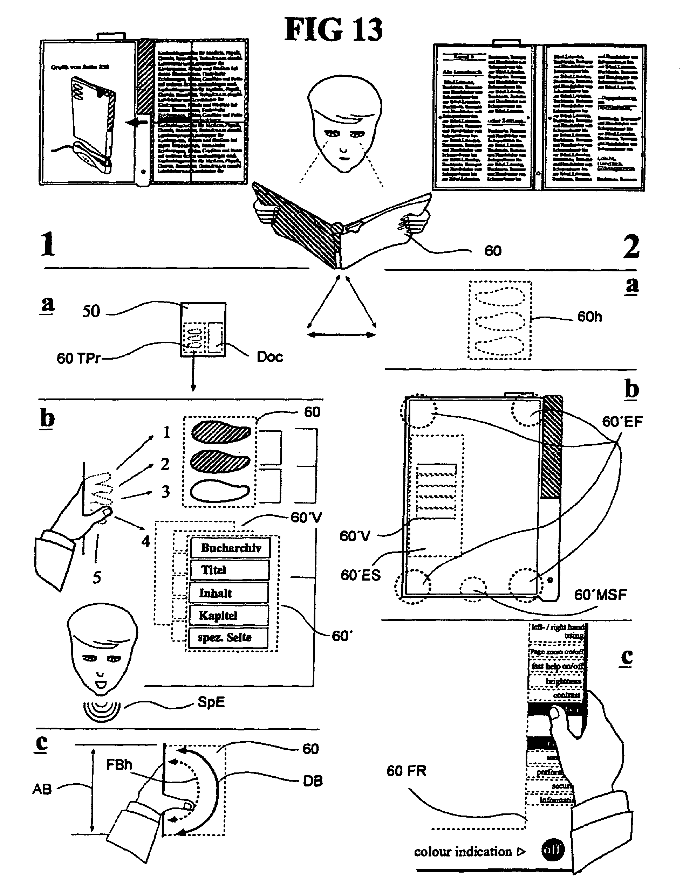

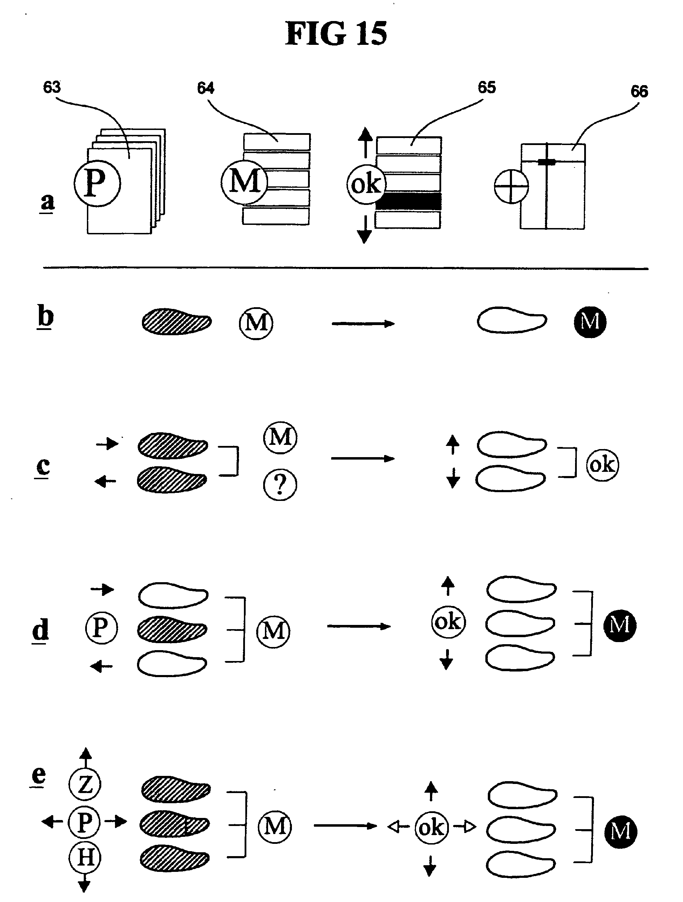

Im Greifhand-Aktionsbereich der haltenden Hand befindliche multifunktionale Eingabemittel (Fig. 11/60h), welche kombinierbar sind (Fig. 13-19) und softwaregesteuert programmiert bzw. umgeschaltet werden können (Fig. 13 bis 22) und vorzugsweise auf der der Anzeigenfläche abgewandten Seite als Tasten ausgebildet sind, die mit den Fingern der haltenden Hand bedient werden (Fign. 3, 4, 5, 6, 11, 13 bis 19), wobei Funktionen nur bei Bedarf angezeigt werden und am Rand behandelt werden ohne das Dokument zu stören (Fig. 15A, 16- 21) ermöglichen:
a) eine schnellere Ausführung von Bedienroutinen;
b) eine Minimierung von Bewegung bzw. Vermeidung von ständiger Haltungsänderung der ein Anzeigemittel haltenden Hand;
c) eine Reduzierung des technischen Eindrucks und/oder Aufwandes bei größtmöglichen Nutzen bei geringstmöglichen Eingabeelementen;
d) eine bessere Verteilung der Aufgaben auf die einzelnen Finger;
e) eine Vergrößerung der vorderseitigen Anzeigenfläche;
f) eine Flexibilität durch die zusätzliche Möglichkeit der Kombination mit anderen Eingabemitteln, wie z.B. die Anzeigenfläche und/oder reale Bedienelemente, welche auch mit der anderen Hand bedient werden können, und/oder Spracheingabe; und
g) eine Erleichterung der Orientierung u.a. für Sehbehinderte und Blinde (vorausgesetzt ist selbstverständlich das Vorlesen der Buchinformationen über einen Audioausgang).

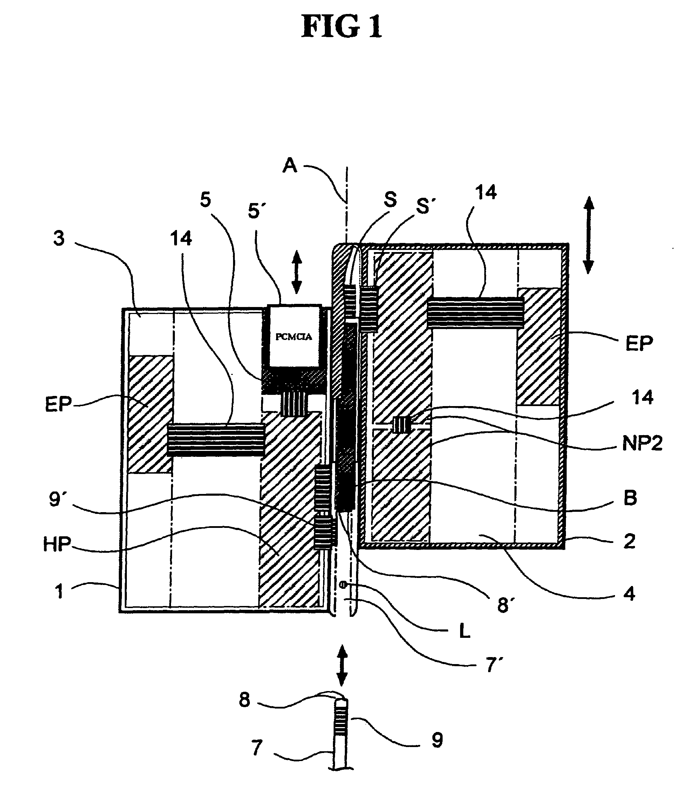

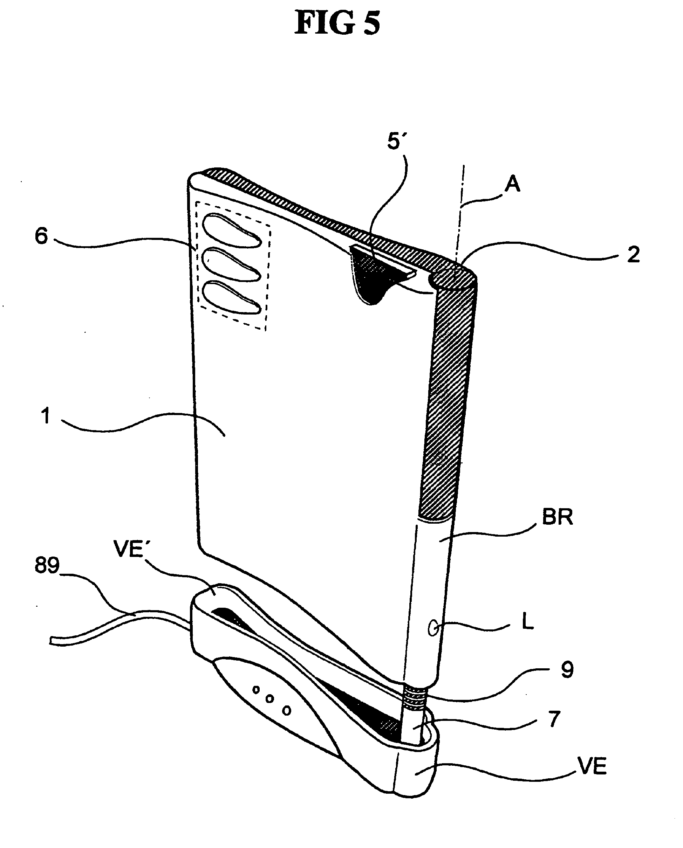

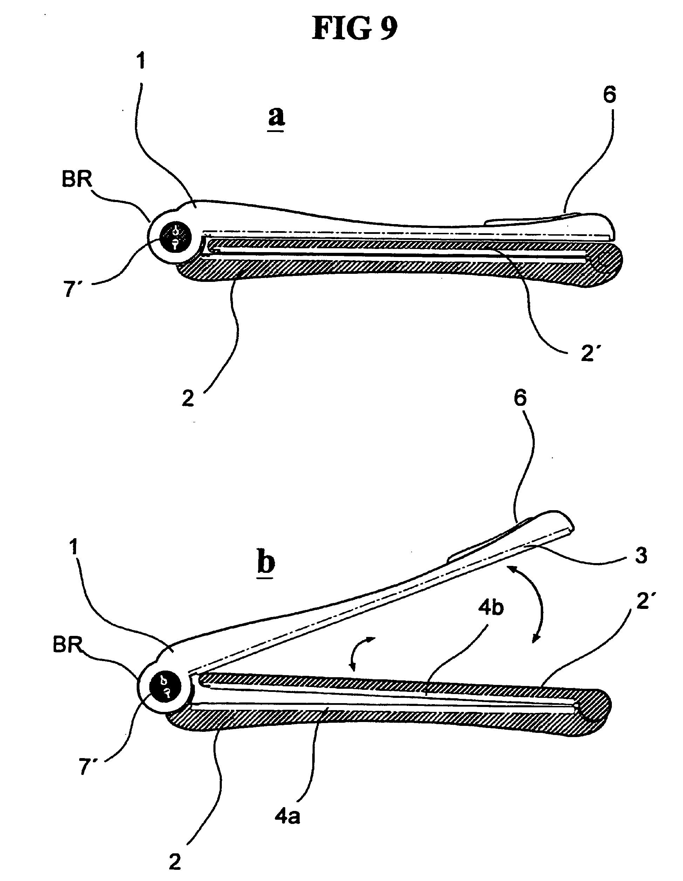

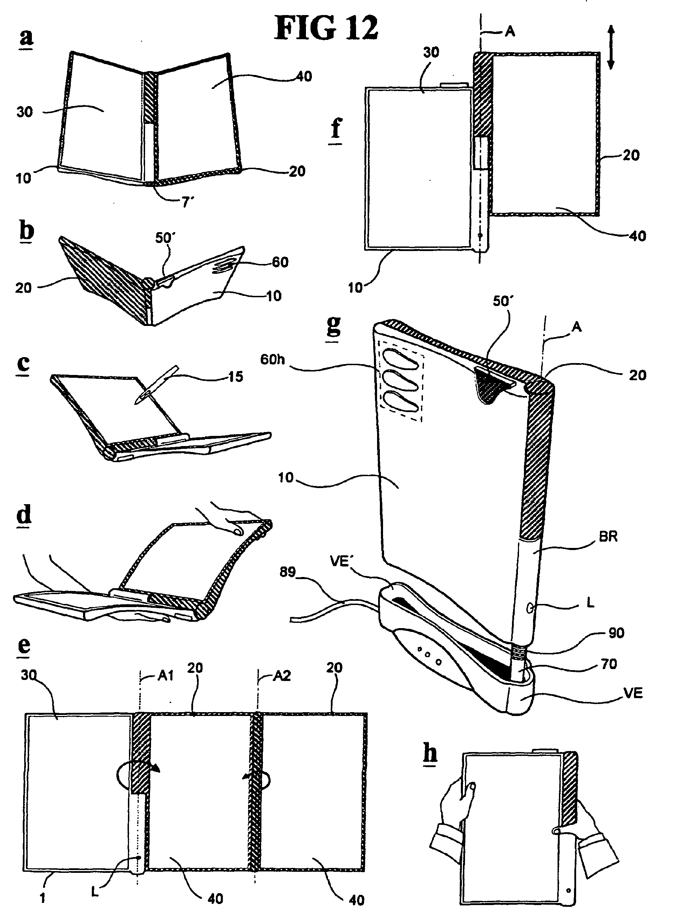

Auf der Unterseite des digitalen Buches befindet sich eine Schnittstelle (Fig. 9), vorzugsweise im Drehgelenk einer zweiteiligen Anzeigeneinheit (Fig. 1-6, 11), welches der Haltegriff einer einteiligen Anzeigeneinheit ist (Fig. 12h), zur Kopplung mittels Kabelverbinder vorzugsweise mit Klinkenstecker, um unterschiedliche Vorrichtungen, Geräte und Einrichtungen mit dem Buch wirksam zu verbinden (Fig. 1, 2, 3, 5, 11, 25, 26) und/oder um als Halterung für die Buchstation zu dienen (Fig. 5) und das digitale Buch mittels Signalübertragung mit Dateninformationen und/oder Energie zu versorgen (Fig. 1); wodurch ermöglicht wird:
a) ein unkompliziertes Anschließen;
b) eine Vermeidung von Beschädigung bei unsachgemäßer Handhabung;
c) eine Reduzierung der Schnittstellen und damit verbunden günstigere Herstellungskosten;
d) ein kabel- und steckerfreier Buchrücken zum besseren Ablegen auf z.B. Tischfläche oder Schoß;
e) eine Nutzung sowohl für Kabelanschluß wie auch für den Haltestift der Versorgungsstation;
f) eine günstigere Symmetrie und Balance bei evtl. Zugentstehung durch angeschlossene Versorgungskabel;
g) eine geringere Irritation durch störende Kabel; und
h) eine Reduzierung des "technischen Eindruckes" beim Benutzer.

Ergonomisch ausgeformte Anzeigenrückseite und Flexibilität ermöglichen:
a) in griffigeres, angenehmeres und sichereres Halten beim Bedienen und beim Transportieren;
b) eine kompaktere Bauweise bei sinnvoller und optisch vorteilhafter Unterbringung der erforderlichen Elektronik;
c) eine Sollbiegestelle zur Erleichterung der Biegsamkeit (Flexibilität);
d) das Versehen schutzrückseitig/seitlich angebrachter Bedienelemente;
e) eine Reduzierung des "technischen Eindruckes" beim Benutzer, und
f) eine geringere Verletzungsgefahr und leichter Transport.

Die erfindungsgemäße mobile Anzeigeeinrichtung kann vorteilhaft als leicht mitzuführendes Nachschlagemittel, z. B. als inhaltlich umfangreiche Straßenkarte, Wanderkarte o. ä., benutzt werden. Außerdem kann bei Bedarf umfangreiche Literatur ohne mühseligen Transport einer Vielzahl von herkömmlichen Büchern auf Reisen mitgeführt werden. Das digitale Buch eignet sich insbesondere auch als Nachschlagewerk an Orten, die keine große Bewegungsfreiheit bieten. Hier ist insbesondere das Cockpit eines großen Verkehrsflugzeuges zu erwähnen, in dem üblicherweise eine Vielzahl von Ordnern mit Prüf- und Bedienungsvorschriften mitzuführen sind. Besonders in Notsituationen ist es wichtig, betreffende Hinweise schnell ohne zeitaufwendiges Blättern auffinden zu können. Ein herkömmliches Notebook o. ä. ist wegen dessen komplizierter Handhabung und der Anfälligkeit seines Diskettenlaufwerks z. B. bei Turbulenzen nur bedingt geeignet. Dies gilt im übrigen in hohem Maße auch für Benutzungsfälle in Privatflugzeugen.

Ein weiterer Vorteil besteht darin, dass mindestens zwei Bildschirme im Buchseitenformat (Hochformat) als ganze Seiten gelesen werden können, wobei die zumindest zwei Bildschirme verschiedene Funktionen erfüllen können. So ist es beispielsweise möglich, einen Manuskripttext ganzseitig zu lesen und sich gleichzeitig auf dem Nebenbildschirm Textpassagen auszugsweise anzeigen zu lassen, die vorher auf der Textseite markiert worden sind, oder es lassen sich andere Seiten des betreffenden (z. B. wissenschaftlichen) Buchtextes zum Beispiel mit auf der Textseite erwähnten Illustrationen darstellen, ohne die aktuelle Buchseite damit zu überdecken oder wegzublenden. Außerdem lassen sich Querverweise, Nachschlagehinweise usw. durch Markieren des Quellenhinweises, beispielsweise durch Antippen mittels des Bildschirmstiftes, anzeigen, ohne "blättern" zu müssen.

Durch die Möglichkeit des Trennens der Bildschirme der mobilen digitalen Anzeigevorrichtung lässt sich ausgehend von einer Grundausführung desselben (die nur zum Lesen vorgesehen ist) der Nebenbildschirm entsprechend dem Anforderungsprofil und dem Stand der Technik an die Bedürfnisse des Benutzers anpassen und somit das Leistungsspektrum der digitalen mobilen Anzeigevorrichtung erweitern. Beispielsweise kann der Nebenbildschirm drucksensitiv ausgeführt sein, wodurch ein handschriftliches Beschreiben einer Bildschirmseite mittels des Bildschirmstiftes ermöglicht wird, während der geschriebene Text quasi simultan in Druckbuchstaben und ggf. mit Hilfe einer Übersetzungsfunktion der geladenen Software in einer anderen Sprache auf dem Hauptbildschirm dargestellt werden kann. Dies ermöglicht beispielsweise ein schnelleres und bequemeres Erstellen und Bearbeiten von Geschäftsbriefen.

Im Folgenden werden Ausführungsbeispiele der Erfindung anhand mehrerer Figuren im einzelnen beschrieben.
- **Fig. 1**: zeigt eine schematische Draufsicht eines anzeigenteilekoppelbaren Ausführungsbeispiels mit zwei Anzeigenteilen der erfindungsgemäßen mobilen Anzeigevorrichtung im aufgeklappten Zustand des Buchgehäuses mit schematisch angedeuteten Einbauten und Zusatzelementen für das digitale Buch einschließlich der Trennungs- und Verbindungsmöglichkeiten der wesentlichen Teile desselben.

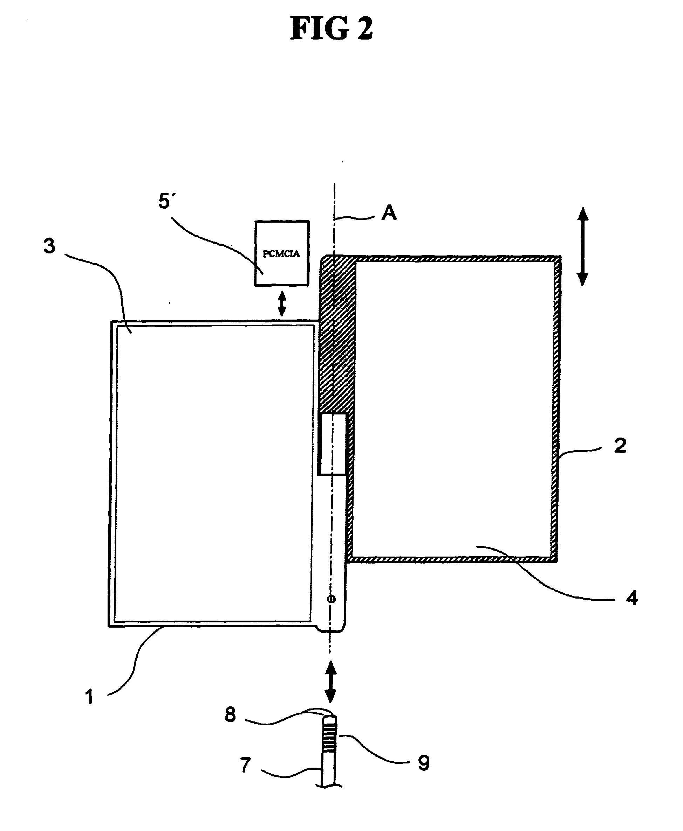

- **Fig. 2**: zeigt eine vereinfachte schematische Draufsicht des anzeigenteilekoppelbaren Ausführungsbeispiels mit zwei Anzeigenteilen der erfindungsgemäßen mobilen Anzeigevorrichtung im aufgeklappten Zustand des Buchgehäuses und Zusatzelemente desselben, ähnlich der in Fig. 1 gezeigten Darstellung.
- **Fig. 3**: zeigt eine schematische Seitenansicht eines fest verbundenen und/oder des HauptTeils des anzeigenteilekoppelbaren Ausführungsbeispiels mit zwei Anzeigenteilen der mobilen Anzeigevorrichtung und vorzugsweise aneinanderliegende Kombinationstastenelemente im Greifrandbereich zur Bedienung desselben.

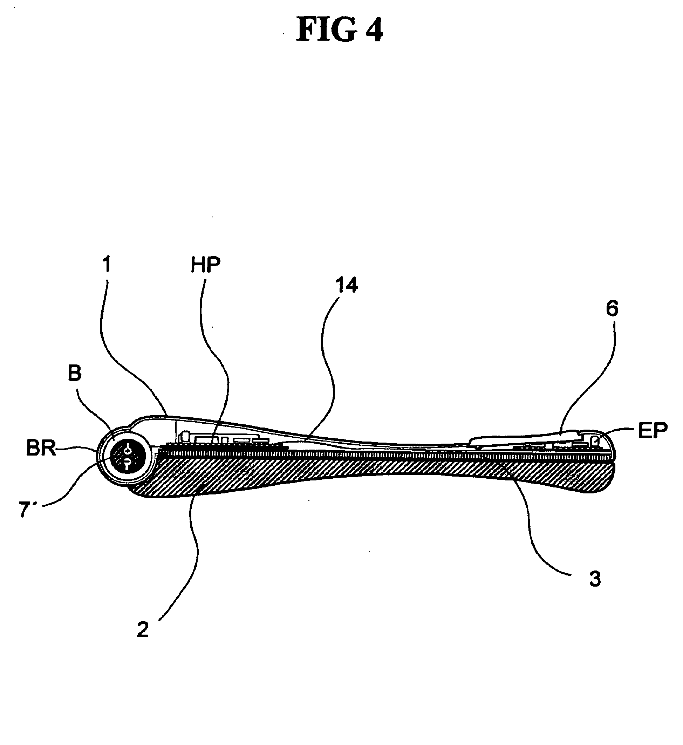

- **Fig. 4**: zeigt teilweise im Schnitt eine Bodenansicht des fest verbundenen und/oder des anzeigenteilekoppelbaren Ausführungsbeispiels mit zwei Anzeigenteilen der geschlossenen erfindungsgemäßen mobilen digitalen Anzeigevorrichtung zur Benutzung der vorzugsweise aneinanderliegenden Kombinationstastenelemente im Greifrandbereich zur Bedienung z.B. durch einen Linkshänder u./o. Rechtshänder wenn z.B. eine beschreibbare Anzeigenfläche auf der rechten Seite der digitalen mobilen Anzeigevorrichtung angeordnet ist.
- **Fig. 5**: zeigt eine perspektivische Ansicht des fest verbundenen und/oder des anzeigenteilekoppelbaren Ausführungsbeispiels mit zwei Anzeigenteilen der erfindungsgemäßen mobilen digitalen Anzeigevorrichtung in geschlossenem Zustand zur Benutzung der vorzugsweise aneinanderliegenden Kombinationstastenelemente im Greifrandbereich zur Bedienung und eine perspektivische Ansicht einer Versorgungseinheit.

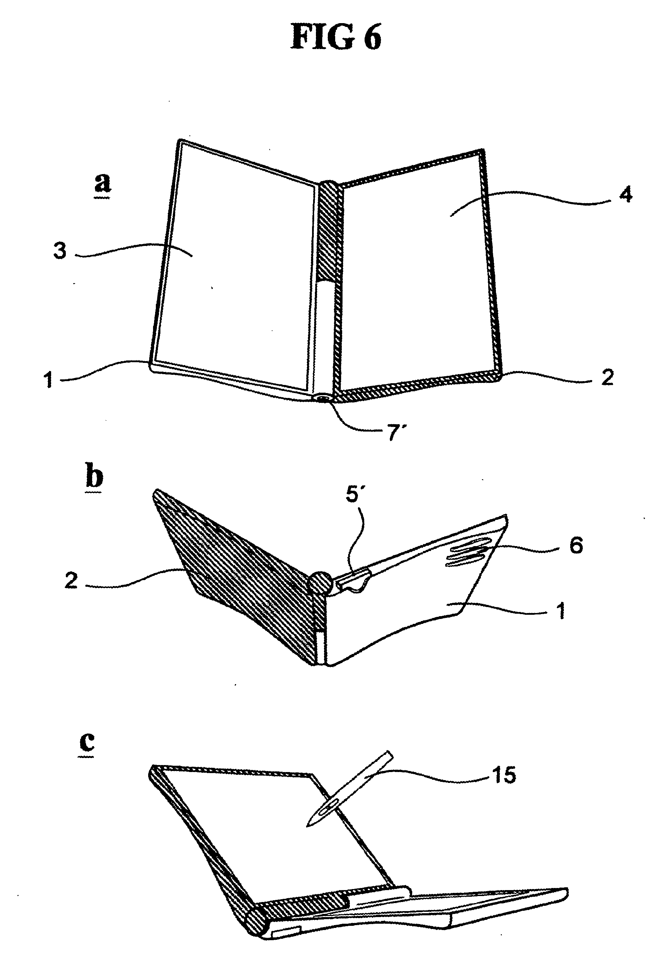

- **Fig. 6a, Fig. 6b u. Fig. 6c**: zeigen verschiedene perspektivische Ansichten im "aufgeschlagenen" Zustand eines festverbundenen und/oder eines anzeigenteilekoppelbaren Ausführungsbeispiels der erfindungsgemäßen mobilen digitalen Anzeigevorrichtung mit zwei Anzeigenteilen, zum Lesen und/oder Beschreiben einer beschreibbaren Anzeigenfläche.

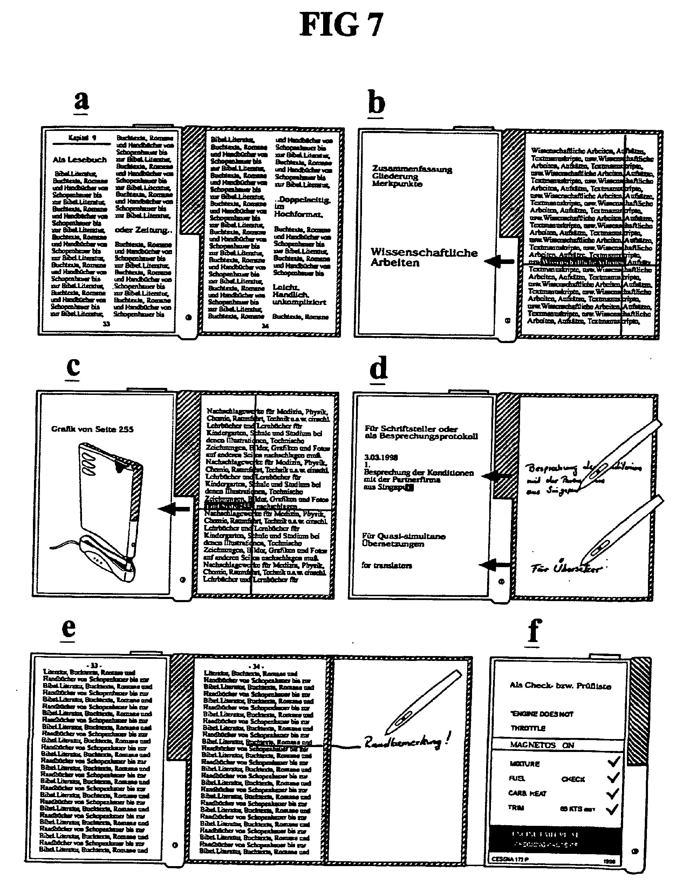

- **Fig. 7a, Fig. 7b, Fig. 7c, Fig. 7d, Fig. 7e u. Fig. 7f**: zeigen verschiedene Darstellungen, jedoch nicht darauf beschränkt, des fest verbundenen und/oder des anzeigenteilekoppelbaren Ausführungsbeispiels mit einem, zwei und drei Anzeigenteilen der erfindungsgemäßen mobilen digitalen Anzeigevorrichtung in verschiedenen Benutzungsfällen, aus welchen Darstellungen verschiedene Vorteile des digitalen Buches ersichtlich sind.

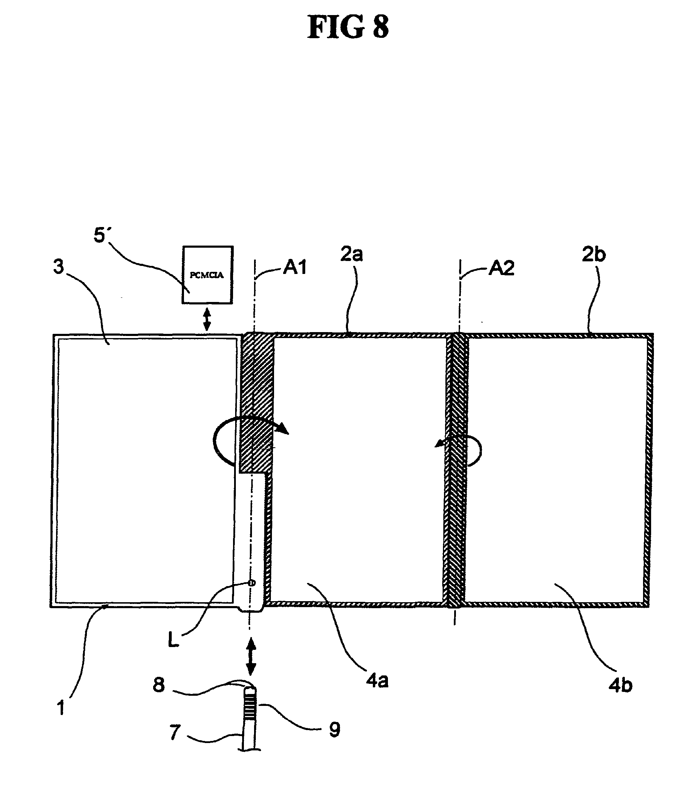

- **Fig. 8**: zeigt die Darstellung einer Aufbaumöglichkeit des Nebenteils eines anzeigenteilekoppelbaren Ausführungsbeispiels der erfindungsgemäßen mobilen digitalen Anzeigevorrichtung in Form eines Doppelbildschirms ähnlich einem Faltplan oder einem Terminplaner im "aufgeschlagenen" Zustand der mobilen digitalen Anzeigevorrichtung für einen Benutzungsfall mit drei Bildschirmen.
- **Fig.9a u. Fig. 9b**: zeigen Darstellungen der selben Ausführungsform, wie sie in Fig. 8 gezeigt ist, im zusammengefalteten oder "zugeschlagenen" Zustand der mobilen Anzeigevorrichtung.

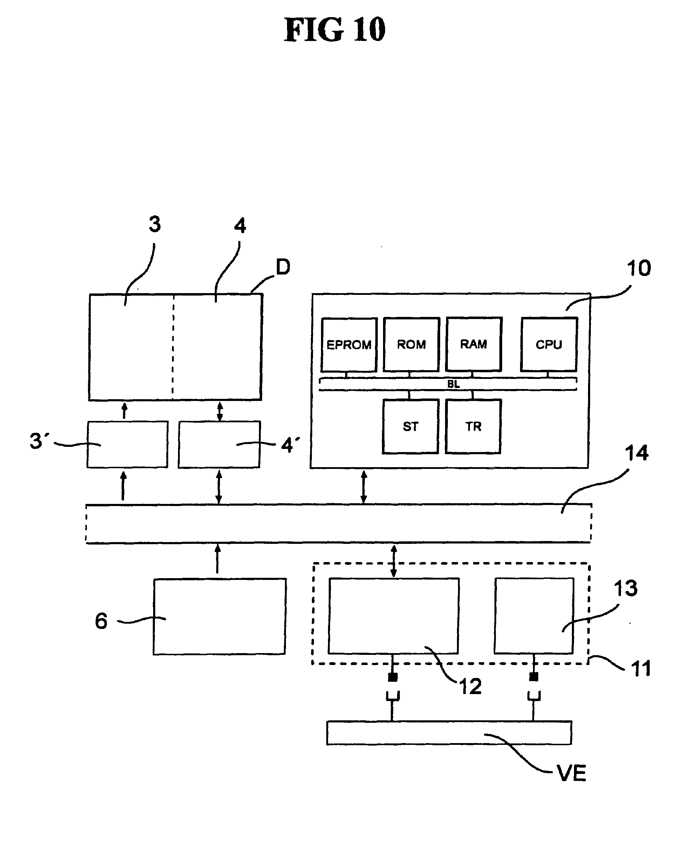

- **Fig. 10**: zeigt ein beispielhaftes jedoch nicht auf dieses beschränktes Blockschaltbild des anzeigenteilekoppelbaren Ausführungsbeispiels der erfindungsgemäßen mobilen digitalen Anzeigevorrichtung einer Konfiguration von Einheiten und Bausteinen zum Betrieb der digitalen mobilen Anzeigevorrichtung.
- **Fig. 11**: zeigt die Darstellung des fest verbundenen und/oder anzeigenteilekoppelbaren Ausführungsbeispiels mit zwei Anzeigenteilen der erfindungsgemäßen mobilen Anzeigevorrichtung, jedoch nicht darauf beschränkt, und die der Erfindung zu Grunde liegenden optimierten Benutzerschnittstellen zur einfachen Bedienung durch einen Laienanwender, und zur Reduzierung von technischen Informationen.
- **Fig. 12**: zeigt die Darstellung unterschiedlicher Erscheinungsformen der erfindungsgemäßen mobilen digitalen Anzeigevorrichtung, jedoch nicht darauf beschränkt, als einoder mehrteilige, festverbundene oder anzeigenteilekoppelbare Ausführung.
- **Fig. 13**: zeigt die der erfindungsgemäßen mobilen digitalen Anzeigevorrichtung zu Grunde liegenden Teilaspekte zur Optimierung d.h. zur Vereinfachung der Bedienung bei gleichzeitiger Reduzierung von irritierenden Informationen und/oder technischen Ausbildungen

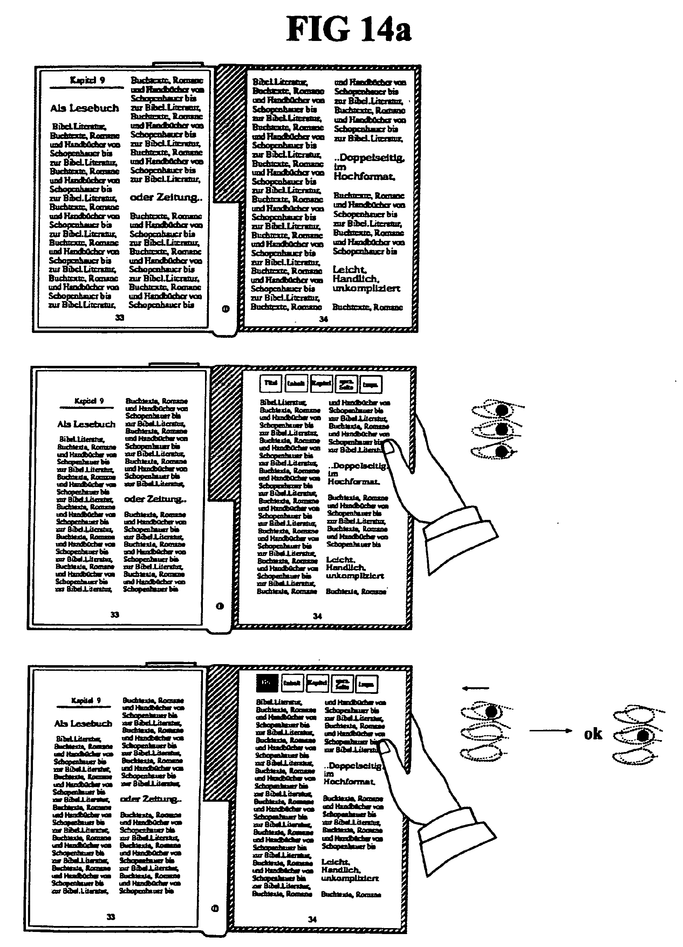

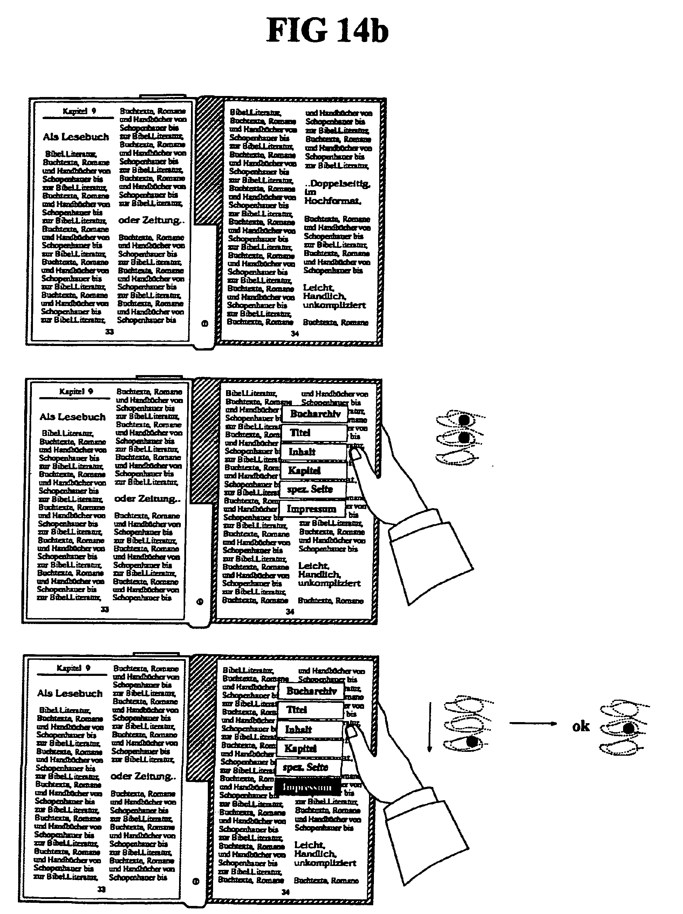

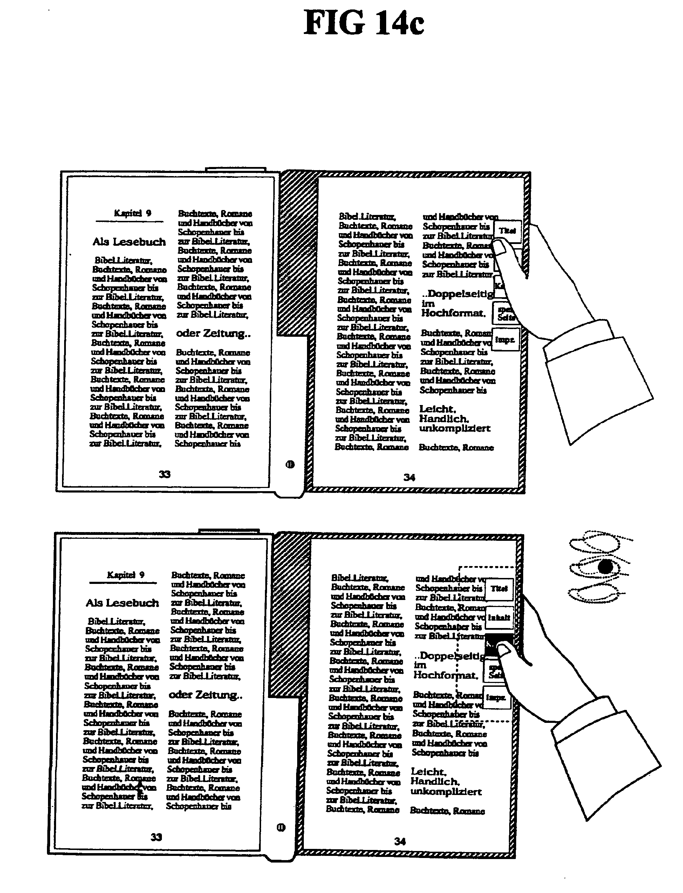

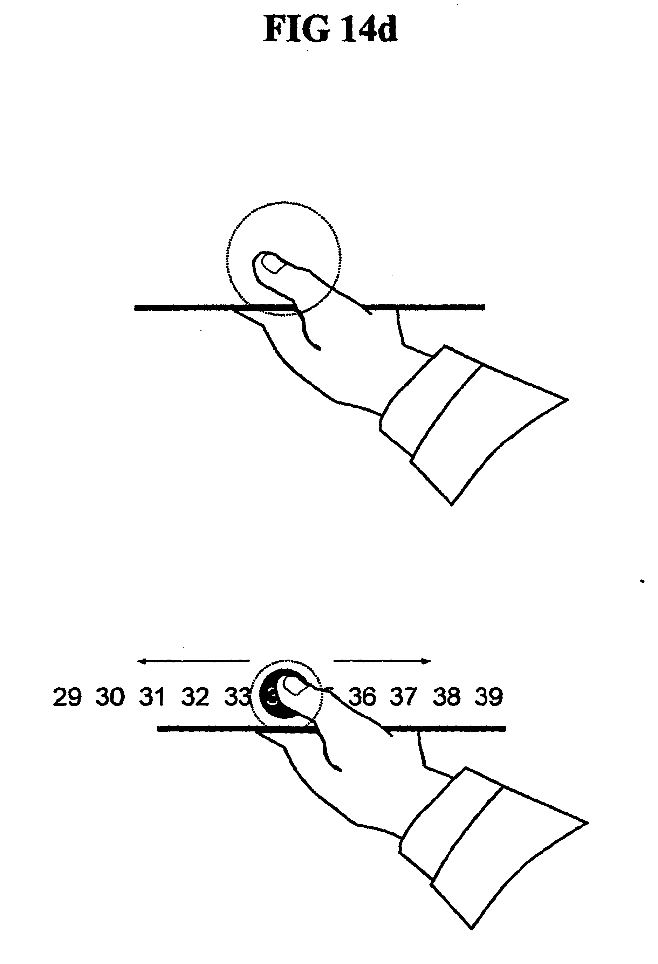

- **Fig. 14**: zeigt am Beispiel einer aufgeschlagenen, zweiteiligen erfindungsgemäßen mobilen digitalen Anzeigevorrichtung, jedoch nicht darauf beschränkt, eine Bereitstellung von Bedieninformationen und deren Weiterbedienung mittels der Anzeigenfläche abgewandten Bedienelemente und/oder mittels der Eingabe über eine sensitive Eingabefläche, und die Bereitstellung einer ersten Funktionsinformation sowie Weiterbedienung über die sensitive Eingabefläche.
- **Fig. 15**: zeigt Funktionsmöglichkeiten einer Minimalkonfiguration von Bedienelementen der erfindungsgemäßen mobilen digitalen Anzeigevorrichtung, mit einer ersten Funktion zur Ausführung einer ersten Aufgabe, am Beispiel des Bereitstellens einer Auswahlinformation auf der Anzeigefläche und der nach der ersten Bedienung folgenden selbsttätigen und softwaregesteuerten Umprogrammierung der Bedienelemente zur Erfüllung einer zweiten Aufgabe, z.B. dem Selektieren und/oder Aktivieren einer ausgewählten Funktion oder dem Ausschalten der Bereitstellung.

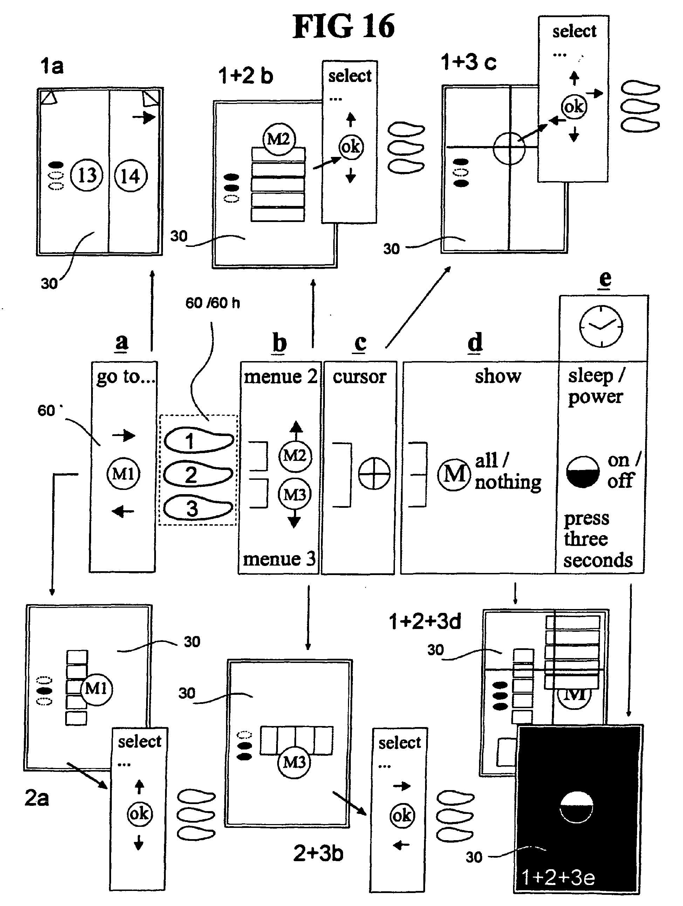

- **Fig. 16**: zeigt die generelle Kombinationsmöglichkeit eines Eingabefeldes der erfindungsgemäßen mobilen digitalen Anzeigevorrichtung, am Beispiel von drei realen Bedienelementen und deren Programmierung hinsichtlich einer ersten Funktion und durch Kombinationsbedienung möglichen weiteren ersten Funktionen, sowie der selbsttätigen softwaregesteuerten Umprogrammierung der Bedienelemente durch einen ersten Bedienschritt, zur Erfüllung einer anderen Aufgabe in einem zweiten Bedienungsschritt.

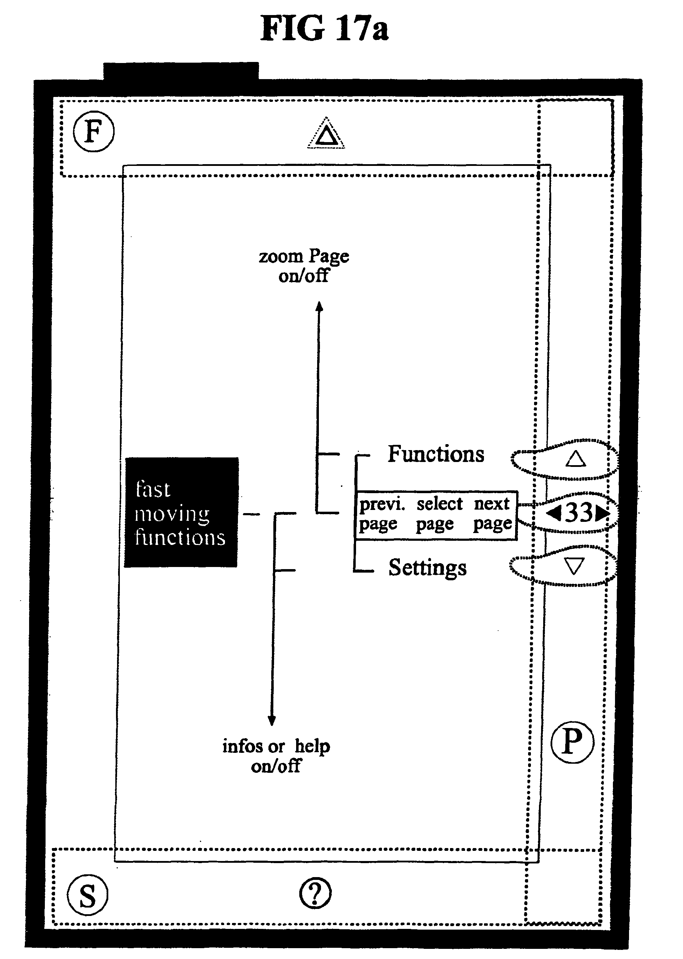

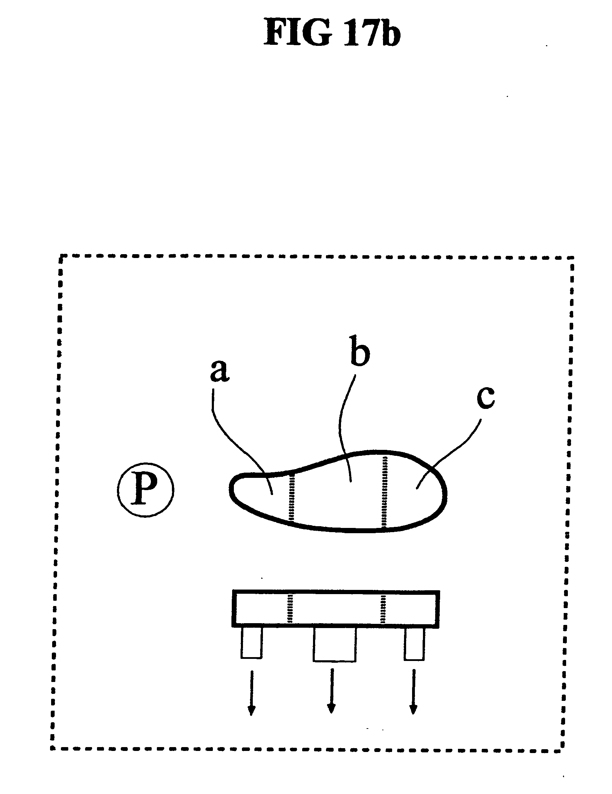

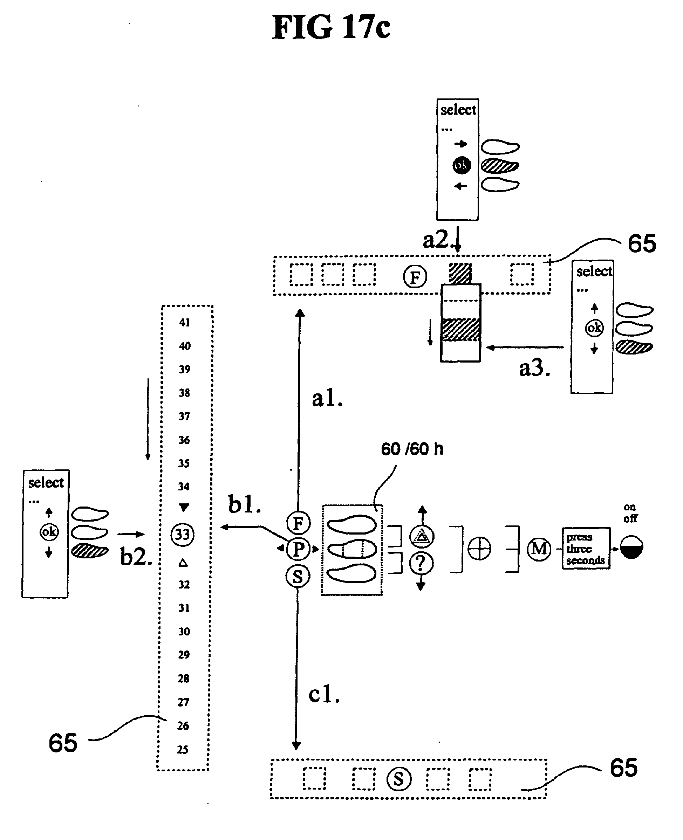

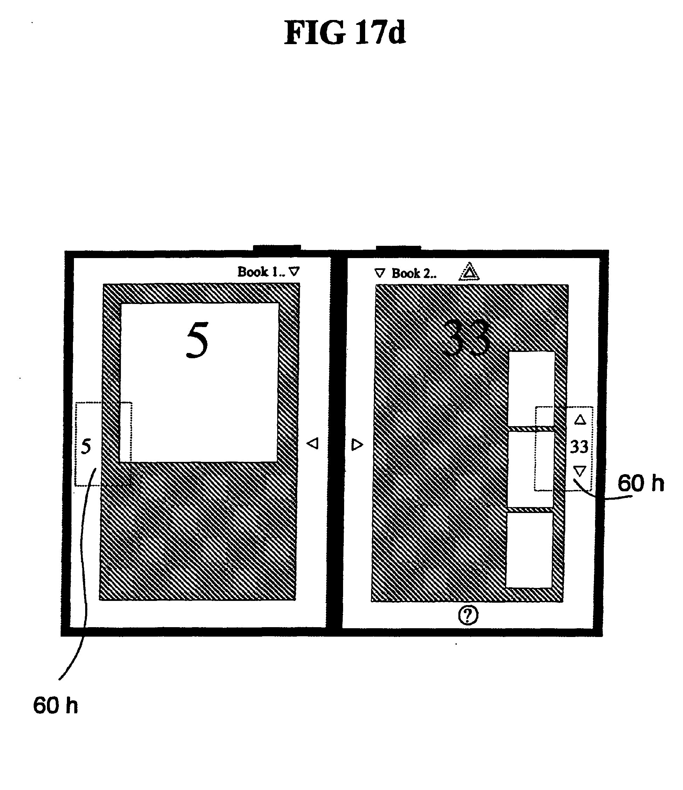

- **Fig. 17**: zeigt am Beispiel eines ein-/ und zweiteiligen Anzeigenteils der erfindungsgemäßen mobilen digitalen Anzeigevorrichtung die Programmierung der vorzugsweise rückseitig angeordneten drei Bedienelemente für ein digitales Buch, bei welchem eine Bedienung nur über reale Bedienelemente bewerkstelligt wird.

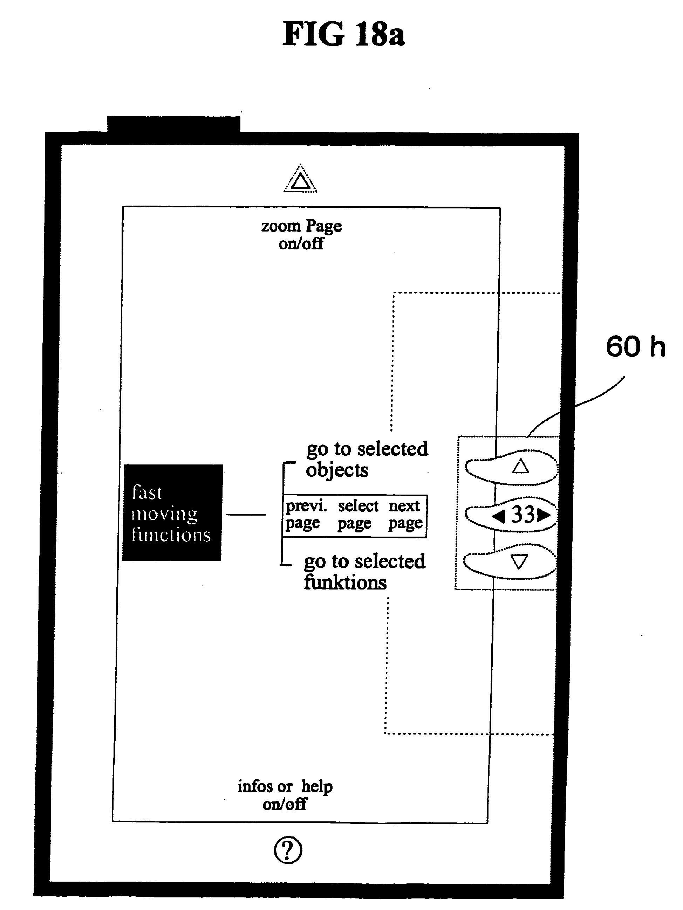

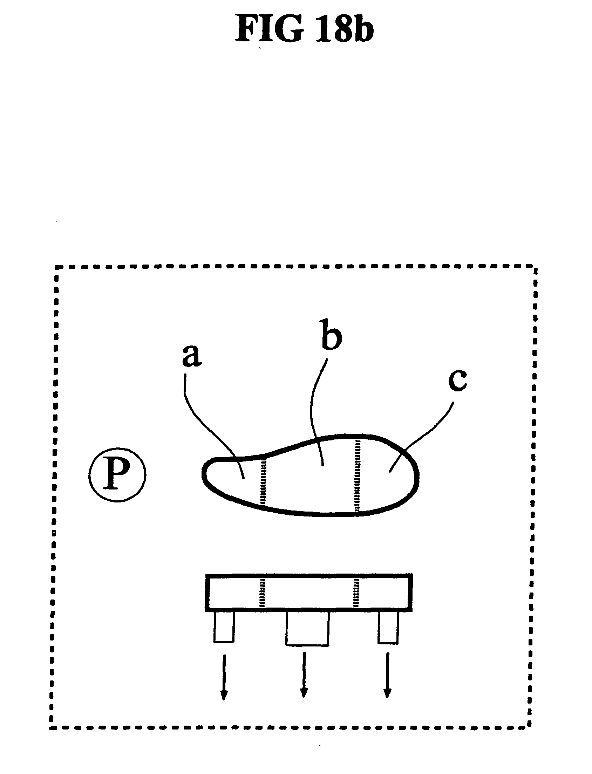

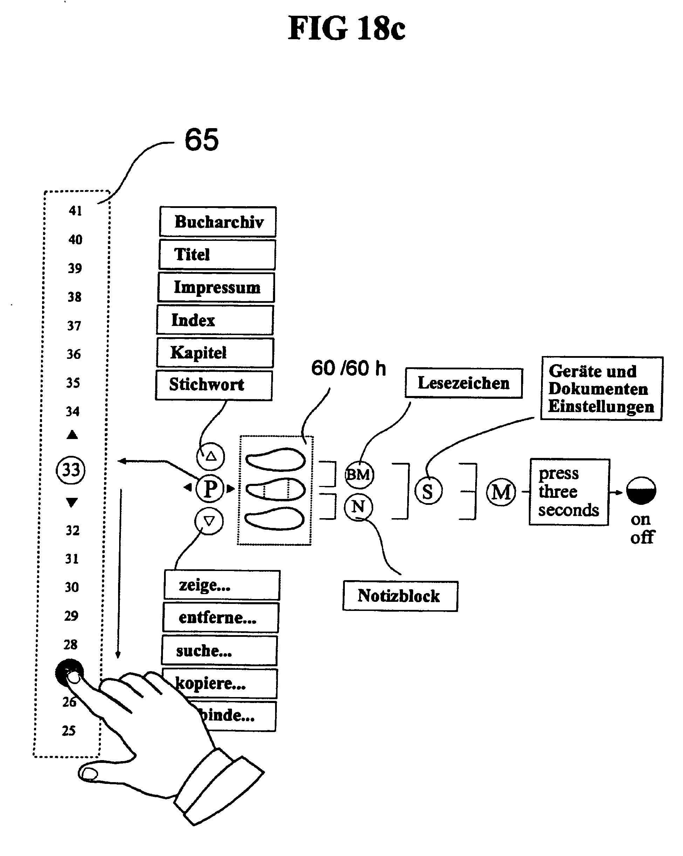

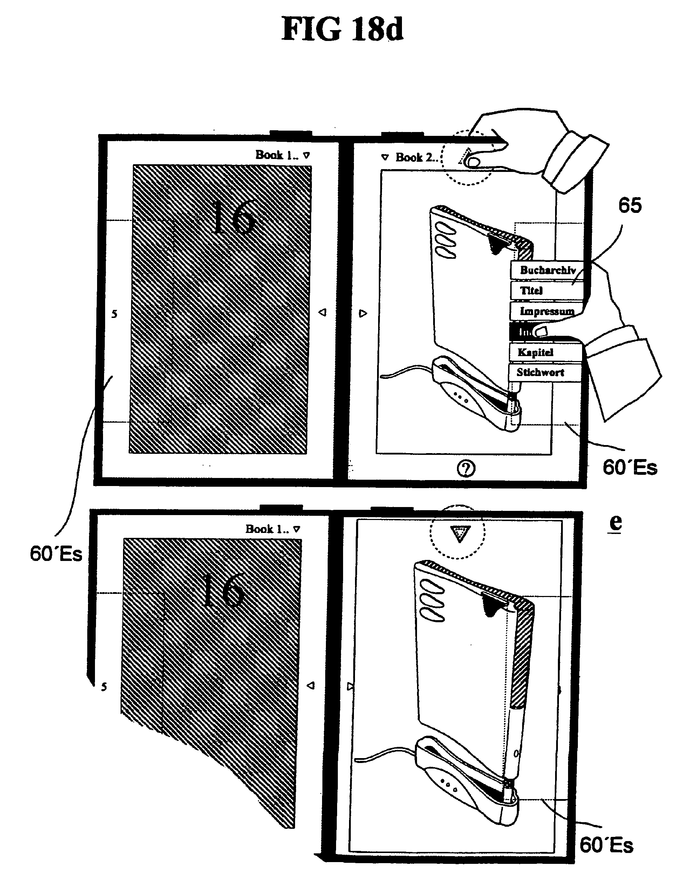

- **Fig. 18**: zeigt am Beispiel eines ein-/ und zweiteiligen Anzeigenteils, mit einer zusätzlichen Möglichkeit der Eingabe über die Anzeigenfläche (Touchscreen), die Programmierung der vorzugsweise rückseitig angeordneten, drei Bedienelemente für ein digitales Buch, bei welchem die realen Bedienelemente in einer ersten Funktion die Bereitstellung von Bedieninformationen auf der Anzeigenfläche realisiert, zur anschließenden Weiterbearbeitungs- bzw. Bedienungsmöglichkeit über eine sensitive Anzeigenfläche.

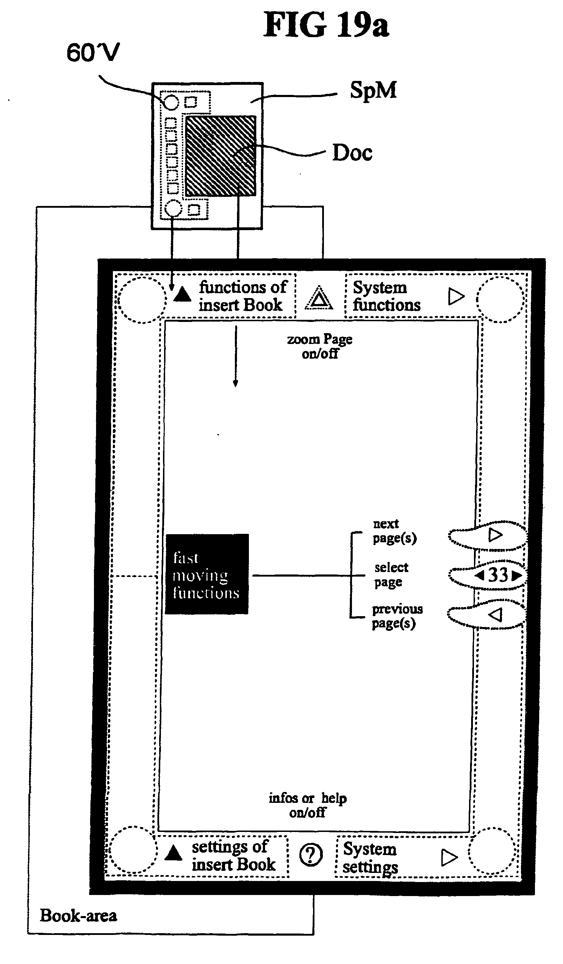

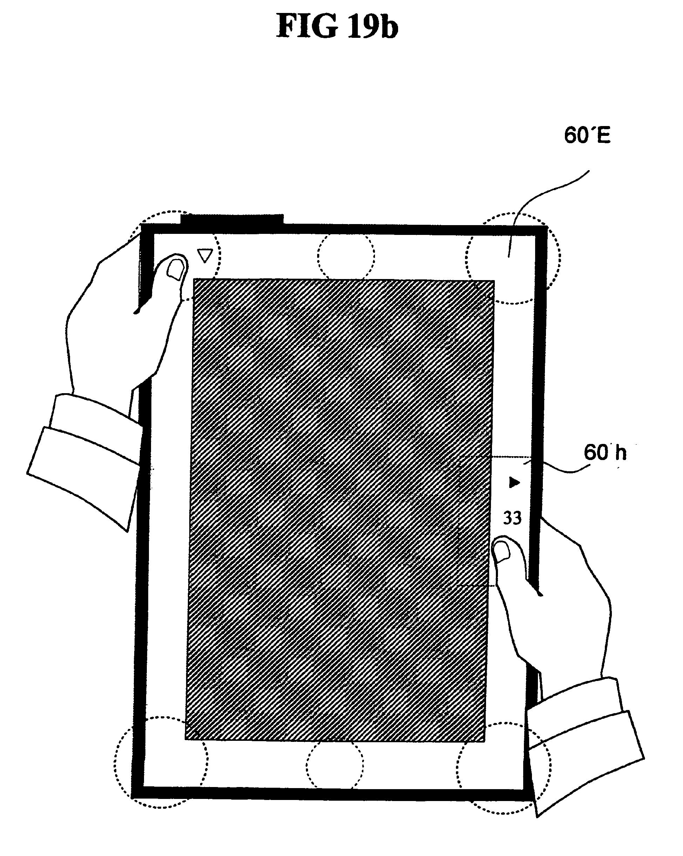

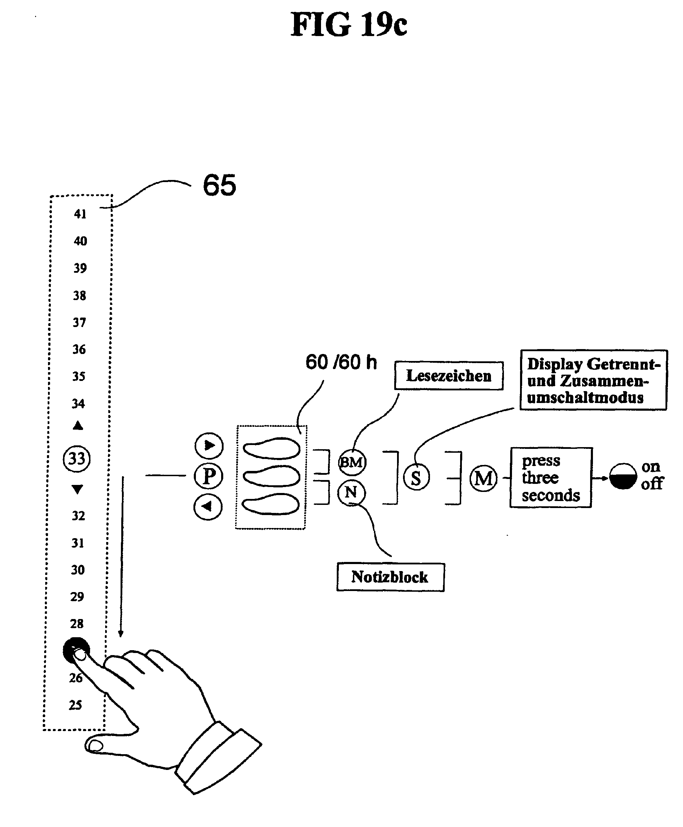

- **Fig. 19**: zeigt am Beispiel eines ein- / und zweiteiligen Anzeigenteils, die Programmierung der vorzugsweise rückseitig angeordneten, drei Bedienelemente für ein digitales Buch, als Schnellfunktionsbedienelemente für häufige Routineoperationen am Beispiel einer ersten Funktion einfach zu betätigenden Bedienelemente, beispielsweise zum Bewegen der Seiten innerhalb eines Buchdokumentes, und die Bearbeitung von nicht so häufig gebrauchten Funktionen über die Anzeigenfläche, wobei diese über das Berühren einer Stelle in der Anzeigenfläche bereitgestellt werden, und beispielsweise durch die Initialisierung eines gekoppelten Buchdokumentes programmiert sind.

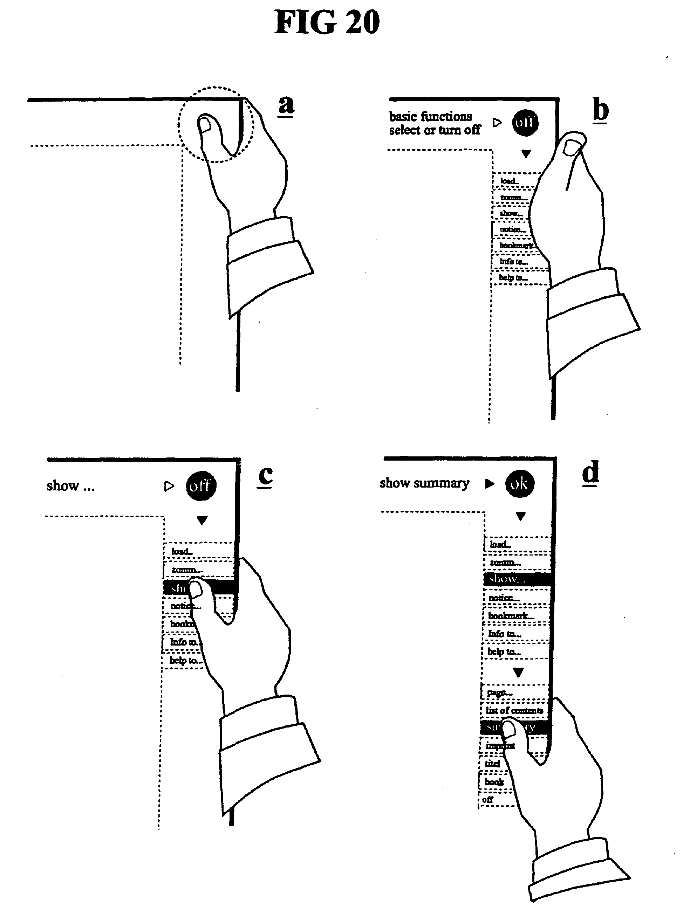

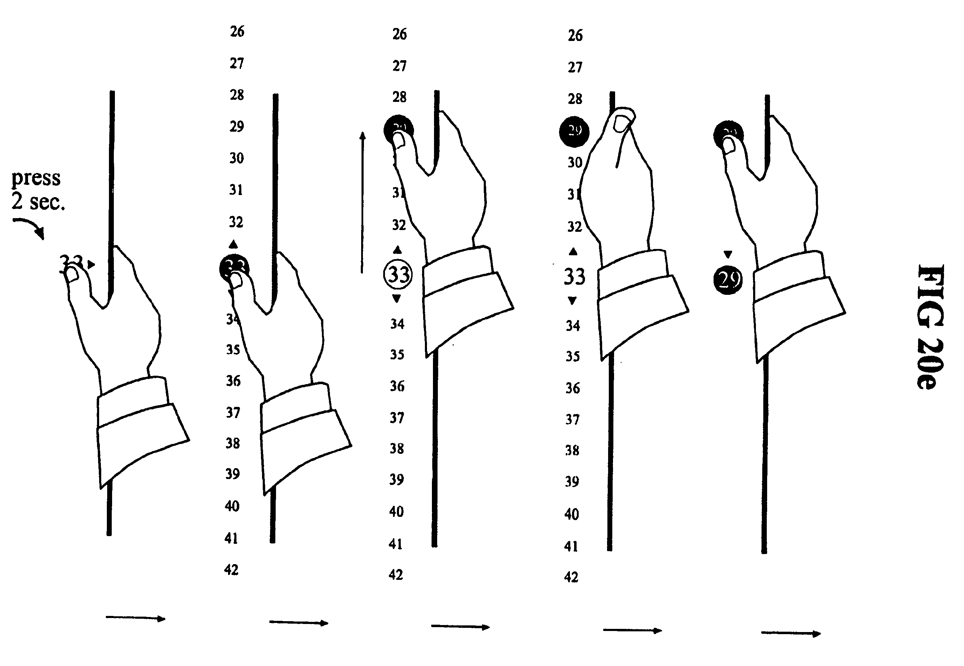

- **Fig. 20**: zeigt am Beispiel einer in der Anzeigenfläche angezeigten Eck- und mittleren Seitenfunktion ein Ausführungsbeispiel der Figur 19 wobei zusätzlich die Seitenrandoperationen im Greifrandbereich der Anzeigeneinheit in einem Dokumentenrand und/oder Rahmen realisiert werden um ein angezeigtes Dokument nicht zu irritieren bzw. zu stören.

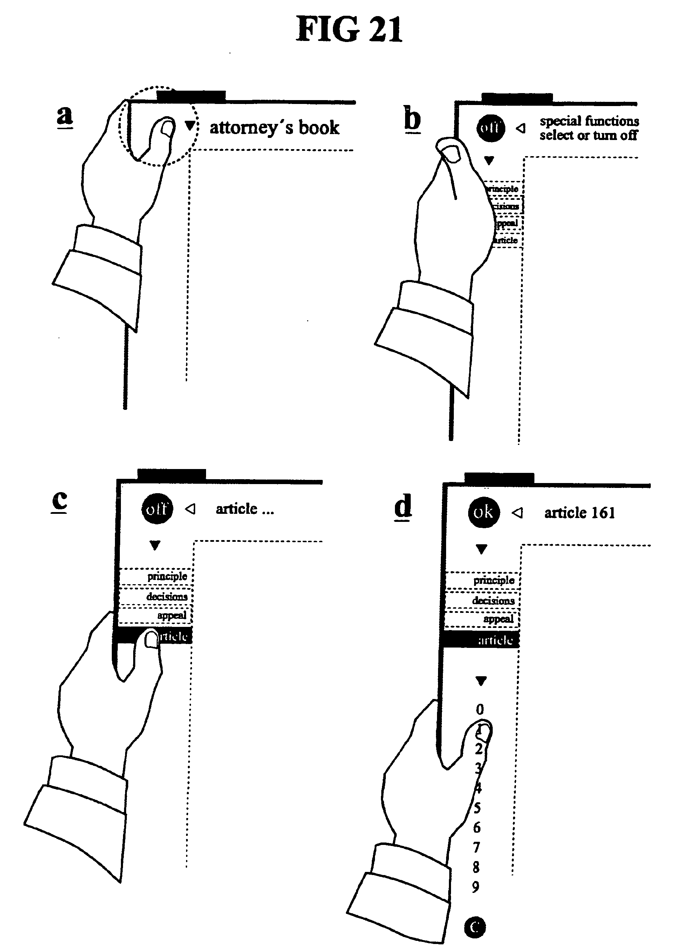

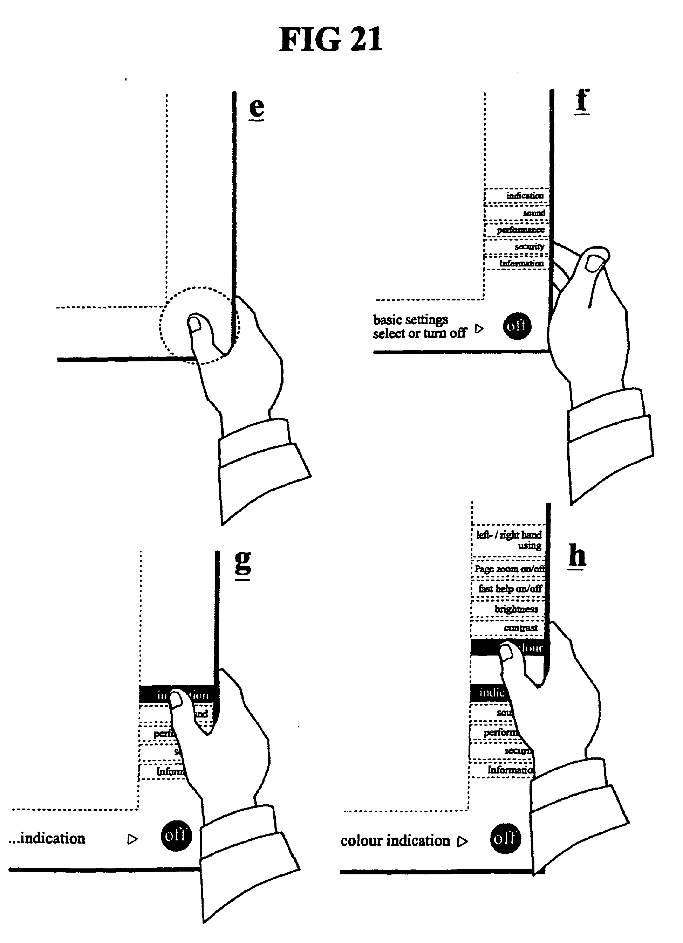

- **Fig. 21**: zeigt am Beispiel zweier in der Anzeigenfläche angezeigten Eckfunktionen ein Ausführungsbeispiel der Figur 19 wobei zusätzlich die Seitenrandoperationen im Greifrandbereich der Anzeigeneinheit in einem Dokumentenrand und/oder Rahmen realisiert werden um ein angezeigtes Dokument nicht zu irritieren bzw. zu stören.

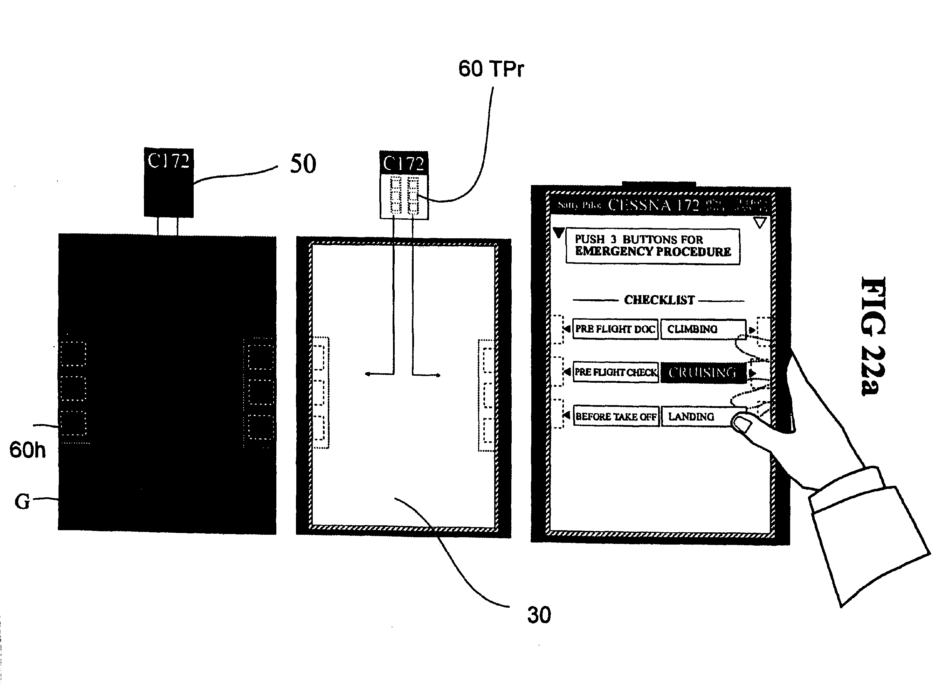

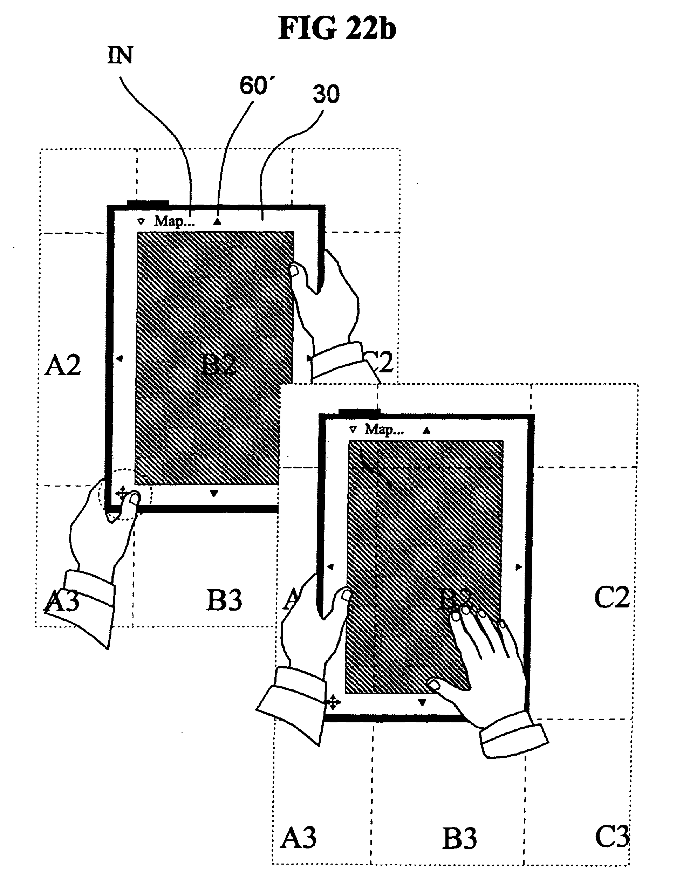

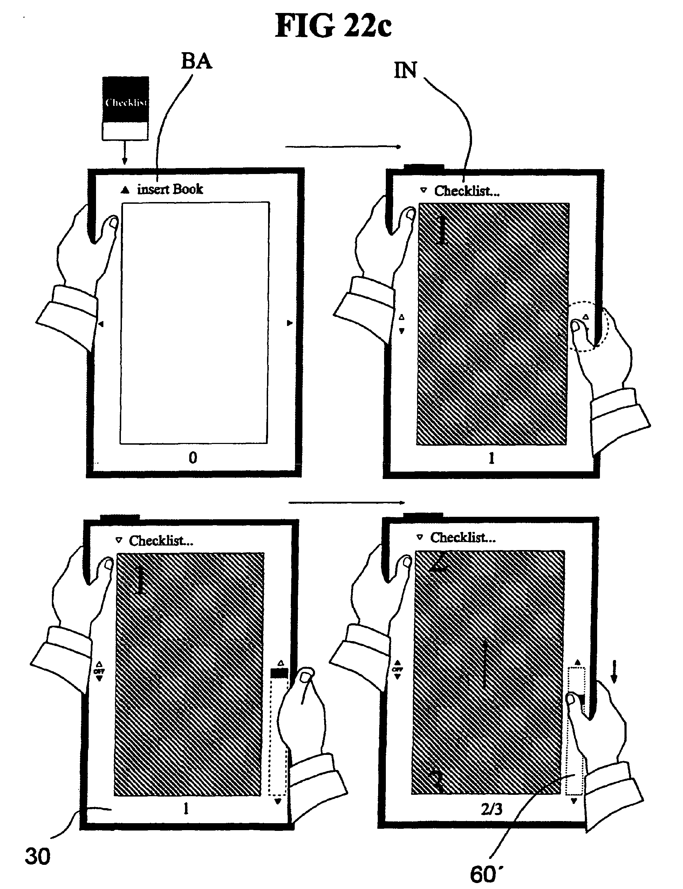

- **Fig. 22**: zeigt am Beispiel einer einteiligen Ausführungsform der vorliegenden Erfindung die selbsttätige und softwaregesteuerte Programmierung von Bedienelementen und damit verbundene Veränderung der angezeigten Bedieninformationen durch ein gekoppeltes Speichermedium bzw. initialisiertes Dokument.

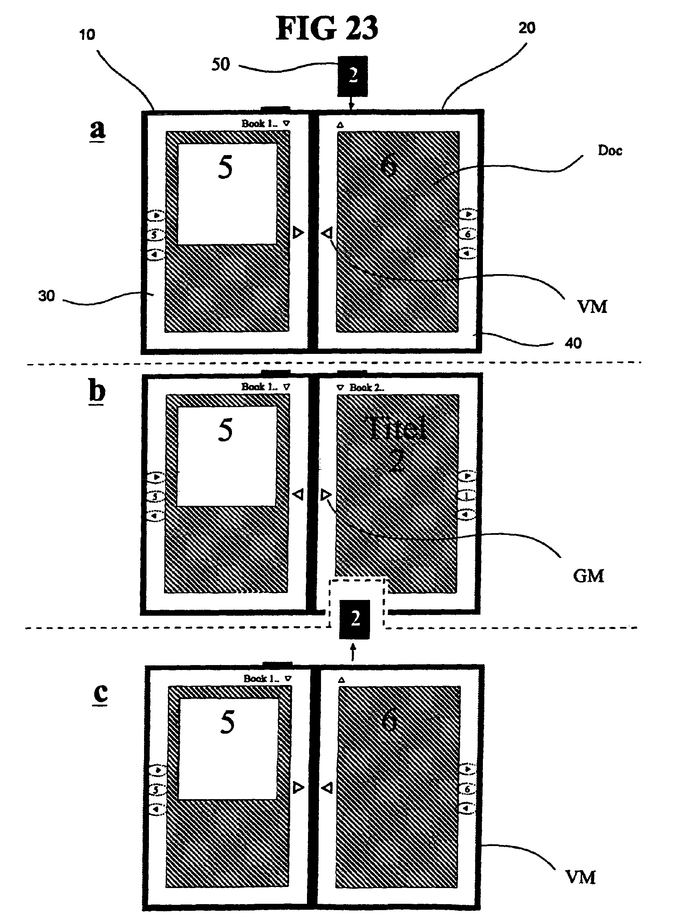

- **Fig. 23**: zeigt am Beispiel einer zweiteiligen Ausführungsform der vorliegenden Erfindung das selbsttätige automatische Umschalten eines Anzeige-Verbundbetriebsmodus beim Koppeln eines zweiten Buchdokumentes mit dem digitalen Buch in einen Anzeige-Getrenntbetriebsmodus mit entsprechender Darstellung des Dokumentes auf der Anzeigenfläche sowie den mit einem umgekehrten Vorgang verbundenen selbsttätigen Umschalten von einem Anzeige-Getrenntbetriebsmodus in einen Anzeige Verbundbetriebsmodus.

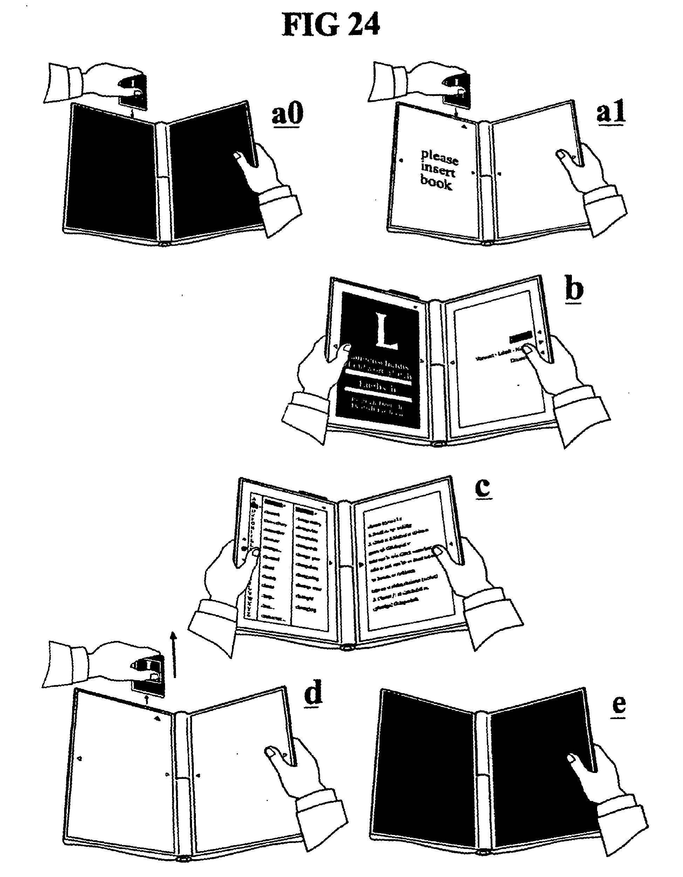

- **Fig. 24**: zeigt am Beispiel einer zweiteiligen Ausführungsform des erfindungsgemäßen digitalen Buches, der mit dem Koppeln eines Festkörperspeichers verbundene selbsttätige Ein- und/oder Ausschaltprozess des digitalen Buches, sowie die durch das koppeln des Festkörpers automatische bewirkte Bestrebung den Inhalt des Festkörpers einzurichten und/oder Anzuzeigen.

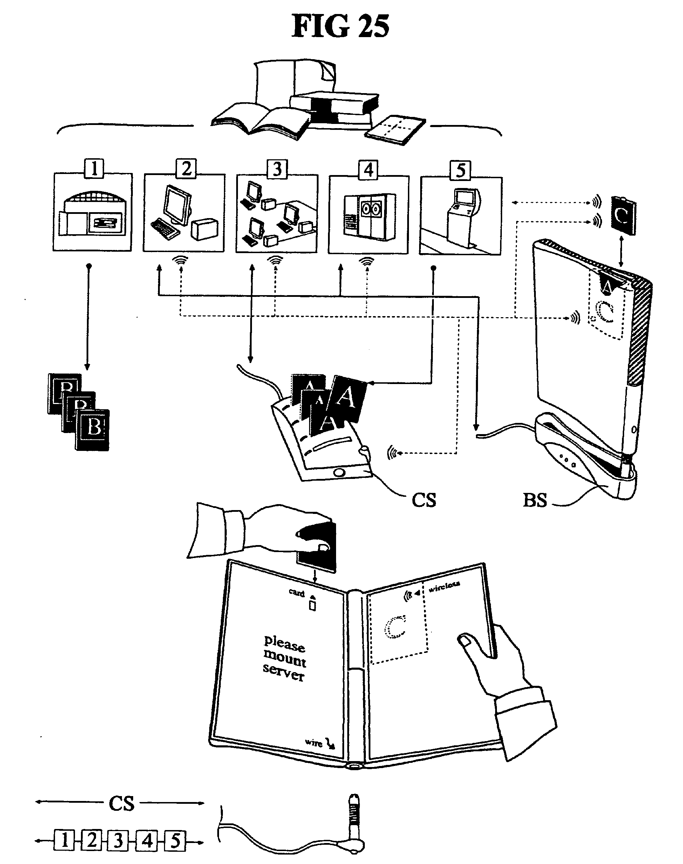

- **Fig. 25**: zeigt am Beispiel einer zweiteiligen Ausführungsform des erfindungsgemäßen digitalen Buches, die Kopplungsmöglichkeit unterschiedliche externer Geräte oder Einrichtungen über eine an der Unterseite des Digitalen Buches angebrachte Multifunktionsschnittstelle, welche als Schnittstelle für Kabelverbinder und/oder der Versorgungsstation ausgelegt ist

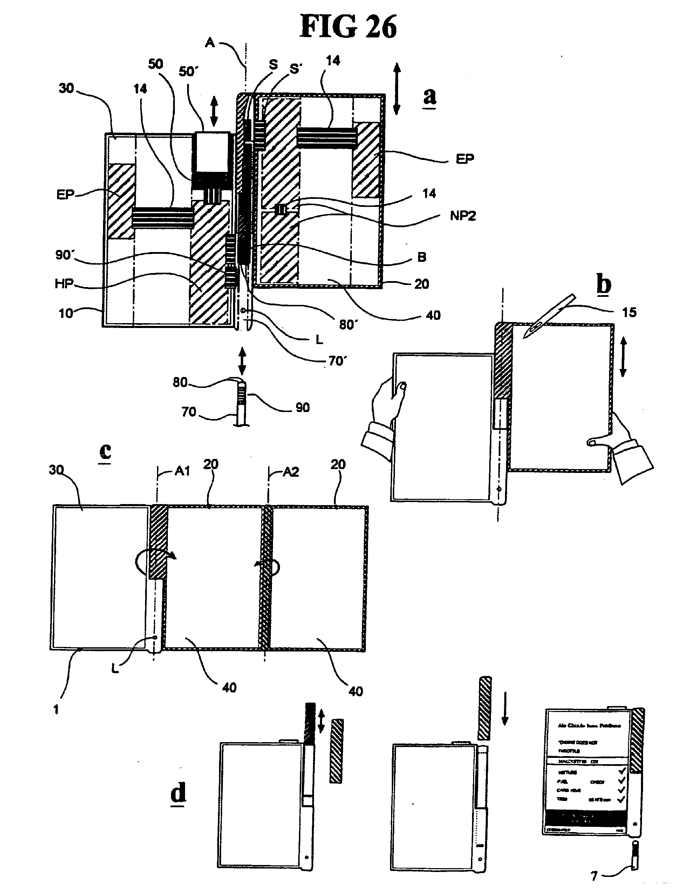

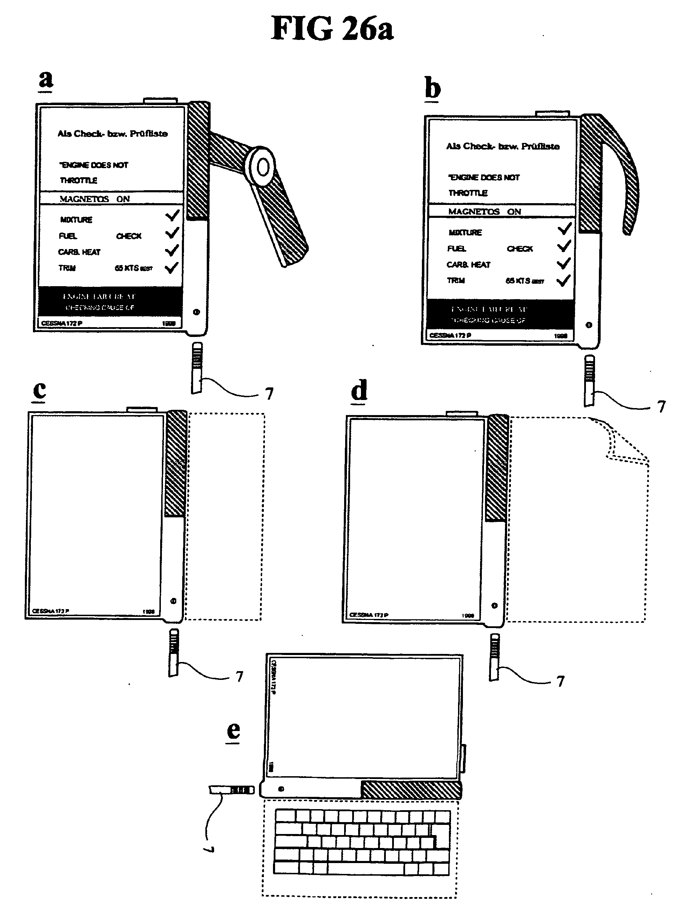

- **Fig. 26**: zeigt beispielhaft, eine Hardware Kopplungs- und Entkopplungsmöglichkeit mittels Auf- oder Abstecken unterschiedlicher Hardwareteile über das Drehgelenk eines zweiteiligen Digitalen Buches welche beim Abstecken eines Teiles, der Haltegriff eines einteiligen digitalen Buches ist in der Elektronik untergebracht ist.
- **Fig. 26a**: zeigt am Beispiel einer einteiligen Ausgangsbasis die in Fig. 26 beschriebene Ankopplung eines beispielhaften Haltegriffs oder eines Buchdeckels aus irgendeinem Material welches beispielsweise flexibel gezeigt ist oder die Ankopplung einer Laptoptastatur.

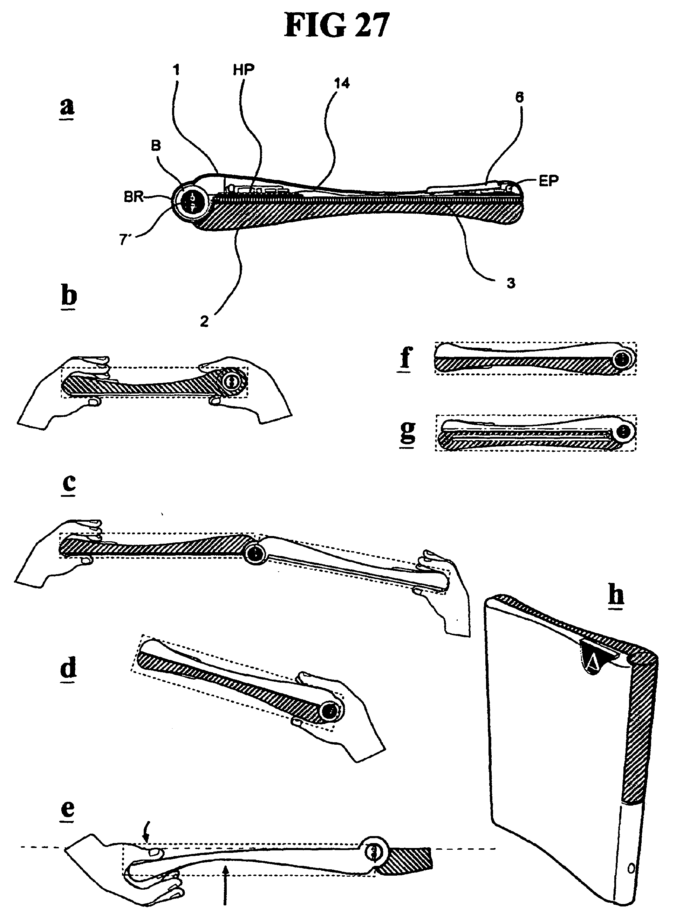

- **Fig. 27**: zeigt die ergonomische Formgebung der vorliegenden Erfindung mit der dadurch erzeugten kompakten Bauweise und der verbesserten Halte- und Bedienmöglichkeit, sowohl eines einteiligen wie eines mehrteiligen digitalen Buches.

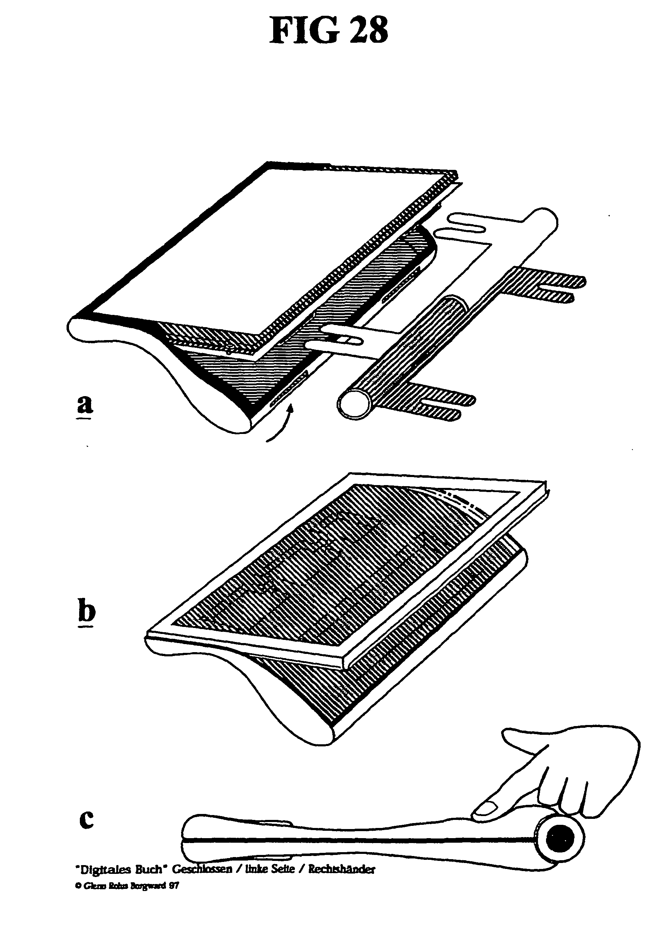

- **Fig. 28**: zeigt ein flexibel ausgebildetes erfindungsgemäßes digitales Buch am Beispiel eines Anzeigenteiles, und deren flexible Ausbildung zumindest des Anzeigefläche umfassenden Körpers bzw. Gehäuse als Beispiel einer druckkompressiblen Möglichkeit durch z.B. Verwendung eines elektronikummantelndes Schaumstoffgehäuses.

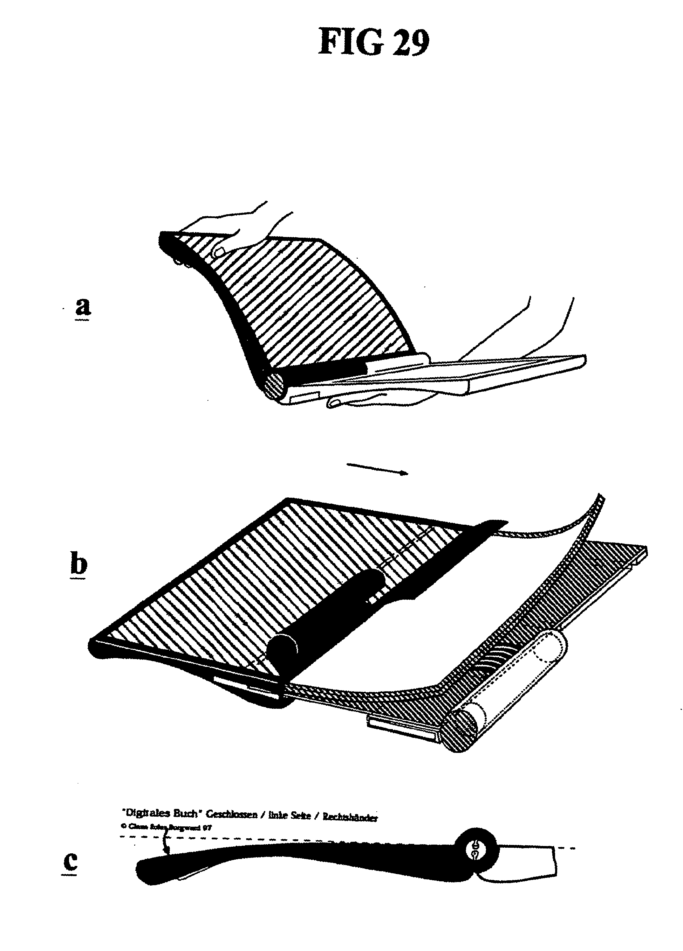

- **Fig. 29**: zeigt ein flexibel ausgebildetes erfindungsgemäßes digitales Buch am Beispiel eines Anzeigenteiles, und deren flexible Ausbildung von Anzeigefläche und Gehäuse als Beispiel einer zumindest teilbiegsamen Möglichkeit durch Verspannen eines z.B. Polymer-Displays in einem Gehäuserahmen an zwei Seiten.

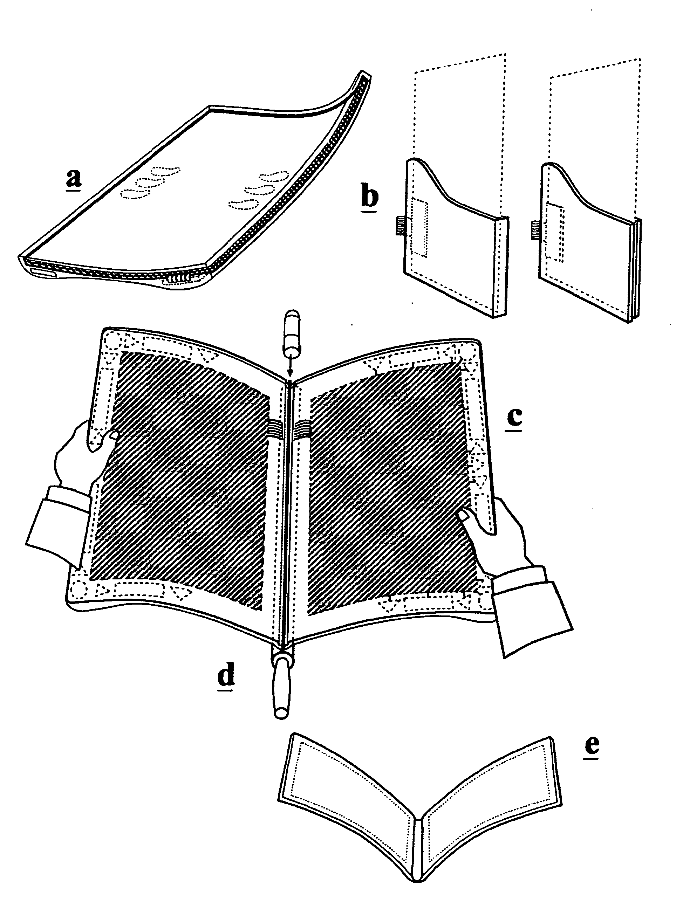

- **Fig. 30**: zeigt mehrere flexibel ausgebildete erfindungsgemäße digitale Bücher am Beispiel von ein oder zwei Anzeigenteilen mit Bedienmöglichkeit, bei der beispielsweise ein oder mehrere Polymer-Display(s) in zumindest teiltransparentem Kunststoff oder kunststoffähnlichem Material zur Festigung verklebt sind.

**Fig. 1** zeigt eine schematische Draufsicht eines anzeigenteilekoppelbaren Ausführungsbeispieles des erfindungsgemäßen digitalen Buchs mit zwei Anzeigenteilen 1,2 im aufgeklappten Zustand des Buchgehäuses mit schematisch angedeuteten Einbauten und Zusatzelementen EP, EP2, HP, NP2, 14, 5, 5', B für das koppelbare digitale Buch einschließlich der Trennungs- und Verbindungsmöglichkeiten der wesentlichen Teile desselben. Ein buchartig auf- und zuklappbares Gehäuse der zweiteiligen Ausführungsform weist zumindest eine Klappachse A, einen Hauptteil 1 und zumindest einen Nebenteil 2 auf, welche Teile 1, 2 zusammen einen Buchrückenteil bilden. Die Teile 1, 2 sind mechanisch und/oder elektrisch trennbar zusammengesetzt, wobei die erforderlichen elektrischen Verbindungen der beiden Teile 1, 2 beispielsweise mittels Schleifkontakten S, S' hergestellt werden. Zudem sind schematisch eine Haupt-Teilplatine HP, eine Neben-Teilplatine NP und Erweiterungsplatinen EP, EP2 angedeutet, die über Busleitungen 14 miteinander verbunden sind. In dem Gehäuse ist ein Einsteckschacht 5 mit einer Leseeinrichtung zum Einstecken einer PC-Karte 5' oder dgl., die im wesentlichen zum Laden des digitalen Buches mit beispielsweise Buchtexten, Graphiken, Betriebsprogrammen usw. benutzt wird, ausgebildet. Das Gehäuse weist außerdem eine Bedienungseinheit 6 mit mehreren Bedienungselementen, vorzugsweise einzeln oder in Kombination zu betätigenden Tasten, auf (vergl. z. B. Fig. 3).

**Fig. 2:** Das anzeigenteilekoppelbare Ausführungsbeispiel des erfindungsgemäßen digitalen Buchs enthält eine Anzeigeeinheit 1, 2, 3, 4, die zumindest zweiteilig ausgebildet und derart angeordnet ist, dass der Hauptteil 1 mit zumindest einem Bildschirm 3 und der zumindest eine Nebenteil 2 mit zumindest einem Bildschirm 4 im aufgeklappten Zustand des Gehäuses dem Benutzer wie Seiten eines Buches zur Ansicht und einer ggf. erforderlichen Bearbeitung zur Verfügung stehen (vergl. auch Fig. 2).

**Fig. 3:** Der Anzeigenteil des Hauptteils des anzeigenteilekoppelbaren Ausführungsbeispieles des erfindungsgemäßen digitalen Buches ist im zugeklappten Zustand des Gehäuses über einen Führungs- und Versorgungsstift 7, der ein Paar von Stromzuführungskontakten 8 und eine Vielzahl von Kontaktringen 9 zur Zu- und Abführung von Information aufweist, in eine Versorgungseinheit VE (siehe Fig. 5) mit einer Aufnahmeöffnung VE' zur Zu- und Abführung von Informationssignalen und/oder zur Zuführung von Energie und zur Aufbewahrung des digitalen Buches einsetzbar (vergl. Fig. 5). In dem Buchrückenteil BR ist außerdem eine Leuchtdiode L zur Anzeige des Ladestatus der Batterie B angeordnet. Die aneinanderliegenden Kombinationstastenelemente sind im Greifrandbereich angeordnet.

Bei einem abweichenden Ausführungsbeispiel können Haupt- und Nebenteil auch klappbar fest miteinander verbunden sein, ohne dass vorgesehen ist, beide Teile voneinander trennen zu können.

**Fig. 4** zeigt teilweise im Schnitt eine Bodenansicht des Haupt-Teils des fest verbunden und/oder des anzeigenteilekoppelbaren Ausführungsbeispieles des geschlossenen erfindungsgemäßen digitalen Buches zur Benutzung durch z.B. einen Linkshänder und/oder Rechtshänder wenn z. B. eine beschreibbare Anzeigenfläche auf der rechten Seite des digitalen Buches angeordnet ist, wobei die Darstellung die zuvor beschriebenen Elemente enthält. Das Gehäuse enthält eine Führungs- und Versorgungsöffnung 7', Gegenkontakte 8' für die Stromzuführung und/oder Gegenkontakte 9' für die Zu- und Abführung von Information. In dem Buchrückenteil BR (vergl. auch Fig. 3) ist eine vorzugsweise wiederaufladbare Batterie B zur Stromversorgung der elektronischen Einheiten und Bausteine des digitalen Buches und zum Treiben der Bildschirme 3, 4 vorgesehen.

**Fig. 5** zeigt, wie bereits angegeben, eine perspektivische Ansicht des fest verbunden und/oder des anzeigenteilekoppelbaren Ausführungsbeispieles mit zwei Anzeigenteilen des erfindungsgemäßen digitalen Buches im geschlossenen Zustand und eine perspektivische Ansicht einer Versorgungseinheit VE mit einer Aufnahmeöffnung VE'. Der aus der Versorgungseinheit ragende Führungs- und Versorgungsstift dient dabei u.a. zur Stabilisierung des digitalen Buches in der Versorgungseinheit. Das digitale Buch ist relativ zu der Versorgungseinheit VE in einem Zustand während einer Entnahme des digitalen Buches oder in einem Zustand während einer Einführung desselben in die Versorgungseinheit VE dargestellt. Die Versorgungseinheit VE weist ein Verbindungskabel 89 zur Zu- und/oder Abführung von Information, beispielsweise von und/oder zu einem PC und/oder einem Modem, und/oder zur Zuführung von Energie zur Versorgung der elektronischen Einheiten und Bausteine und zum Treiben der Bildschirme des digitalen Buches auf. Aneinanderliegende Kombinationstastenelemente sind im Greifrandbereich angeordnet.

**Fig. 6a, Fig. 6b u. Fig. 6c** zeigen verschiedene perspektivische Ansichten im "aufgeschlagenen" Zustand eines festverbundenen und/oder eines anzeigenteilekoppelbaren Ausführungsbeispieles des erfindungsgemäßen digitalen Buches mit zwei Anzeigenteilen, zum Lesen und/oder z.B. Beschreiben einer beschreibbaren Anzeigenfläche. Das Beschreiben des beschreibbaren Anzeigenfläche, der drucksensitiv ausgebildet ist, erfolgt in dem gezeigten Beispiel mittels eines Bildschirmstiftes 15. Selbstverständlich kann anstelle der Benutzung des Bildschirmstiftes 15 zum Zwecke einer Markierung oder des Auslösens einer bestimmten Funktion eine Fingerkuppe an bestimmter Stelle gegen den Bildschirm gedrückt werden, wie dies im Zusammenhang mit dem sog. Touchscreen bekannt ist

**Fig. 7a, Fig. 7b, Fig. 7c, Fig. 7d, Fig. 7e u. Fig. 7f** zeigen, wie bereits angegeben, verschiedene Darstellungen des fest verbundenen und/oder des anzeigenteilekoppelbaren Ausführungsbeispieles mit einem, zwei und drei Anzeigenteilen des erfindungsgemäßen digitalen Buches in verschiedenen Benutzungsfällen, aus welchen Darstellungen verschiedene Vorteile des digitalen Buches ersichtlich sind.

**Fig. 8** zeigt die Darstellung einer Aufbaumöglichkeit eines Neben-Teils 2a, 2b in Form eines Doppelbildschirms 4a, 4b ähnlich einem Faltplan oder einem Terminplaner im "aufgeschlagenen" Zustand des digitalen Buches für einen Benutzungsfall mit drei Bildschirmen 3, 4a, 4b. In der gezeigten Ausführungsform weist das Gehäuse des digitalen Buches zwei Klappachsen A1, A2 auf.

**Fig. 9a u. Fig. 9b** zeigen Darstellungen der selben Ausführungsform, wie sie in Fig. 8 gezeigt ist, im zusammengefalteten oder "zugeschlagenen" Zustand des digitalen Buches.

**Fig. 10** zeigt, wie bereits angegeben, ein ein Blockschaltbild des anzeigenteilekoppelbaren Ausführungsbeispieles des erfindungsgemäßen digitalen Buches der Konfiguration von Einheiten und Bausteinen zum Betrieb des digitalen Buches. Außer den zuvor beschriebenen Elementen sind gemäß diesem Blockschaltbild eine Anzeigeeinheit D mit zwei Bildschirmen 3, 4, zwei Bildschirmtreiber oder Graphikkarten 3', 4', eine Steuereinheit 10 mit Mitteln zur Aufnahme, Speicherung, Verarbeitung und Wiedergabe von Information, wobei die Information in Form von Text-, Bild, Graphik-, Audio- und/oder Videoinformation gegeben sein kann, eine Schnittstellen-Einheit 11 zur Zu- und Abführung von Information und zur Zuführung von Energie mit einer Informationsschnittstelle 12 und einer Stromversorgungseinrichtung 12 zur Energieversorgung der Einheiten D, 10, 11 aus der Versorgungseinheit VE vorgesehen. Die Steuereinheit 10 enthält einen EPROM, einen ROM, einen RAM, eine CPU, eine Steuereinrichtung ST und eine Treiberschaltung TR, welche Elemente über eine Busleitung BL miteinander verbunden sind. Die Bildschirmtreiber oder Graphikkarten 3', 4', die Bedienungs-Einheit 6 mit den Bedienungselementen, die Steuereinheit 10 und die Informationsschnittstelle 12 sind über die bereits genannte Busleitung 14 miteinander verbunden.

**Fig. 11** zeigt die Darstellung des fest verbunden und/oder anzeigenteilekoppelbaren Ausführungsbeispieles mit zwei Anzeigenteilen des erfindungsgemäßen digitalen Buches, und die optimierten Benutzerschnittstellen zur einfachen Bedienung durch einen Laienanwender und zur Reduzierung von technischen Informationen.

**Fig. 11** zeigt ein erfindungsgemäßes digitales Buch mit einer optimierten Benutzerschnittstelle zur Vereinfachung der Bedienung mit minimalen technischen Informationen, mit zumindest einem auf einer rechten und/oder linken Seite des digitalen Buches befindlichen Manipulationsbereich 60h insbesondere zur Manipulation der angezeigten Informationen und/oder zur Bewirkung einer Betriebszustands- und/oder Einstellungsänderung und/oder zum Laden von Dokumenteninformationen und/oder zum Umschalten in einen anderen Betriebsmodus, wobei in diesem Ausführungsbeispiel der Manipulationsbereich 60h rückseitig (d.h. auf der der Anzeigenfläche abgewandten Seite) angeordnete Funktionstasten F1, F2, F3 sowie vorderseitig einen drucksensitiven Eingabebereich 60t aufweist. Der Eingabebereich 60t kann gegebenenfalls auch mit anderen technischen Mitteln realisiert werden, z. B. kapazitative Näherungsschalter, Miniaturtasten.

Dabei ist der Manipulationsbereich 60h derart angeordnet, dass Bedienhandlungen möglichst an einer Stelle, an der die Anzeigeneinheit 10 gehalten wird, mit den Fingern der haltenden Hand ausgeführt werden können. In Fig. 11 ist beispielhaft eine obere linke Position aufgezeigt, vorzugsweise ist eine Position auf der mittleren Seite einer Anzeigenseite vorgesehen, da die mittlere Position eine neutralere Ausgangsposition zur Bedienung darstellt, wie in späteren Figurenbeschreibung ersichtlich, wobei vorzugsweise drei Kombinationstasten vorgesehen sind.

Eine erste optimierte Benutzerschnittstelle, zur einfachen Bedienung durch den Laienanwender, und zur Reduzierung von irritierenden technischen Informationen, ist zumindest eine auf einer rechten und/oder linken Seite des digitalen Buches befindliche Eingabeeinheit zur Manipulation der angezeigten Informationen und/oder zur Bewirkung einer Betriebszustands- und/oder Einstellungsänderung und/oder zum Laden von Dokumenteninformationen und/oder zum Umschalten in einen anderen Betriebsmodus, jedoch nicht darauf beschränkt, wobei das Haupt- Eingabeelement bzw. Tastenelement(e) vorteilhafter Weise auf der Anzeigenseite abgewandten Seite (60h) des digitalen Buches derart im Greifrand angeordnet sind, dass Bedienhandlungen möglichst an einer Stelle, an der die Anzeigeneinheit (10) gehalten wird, mit den Fingern der haltenden Hand ausgeführt werden können. Hier ist beispielhaft eine obere linke Position aufgezeigt, vorzugsweise ist eine Position auf der mittleren Seite einer Anzeigenseite vorgesehen, da die mittlere Position eine neutralere Ausgangsposition zur Bedienung darstellt, wie in späteren Figurenbeschreibung ersichtlich.

Ebenso nicht einschränkend ist die Verwendung von drei Kombinationstasten, da diese vorzugsweise in dem gezeigten Anschauungsbeispiel Verwendung finden, jedoch durch andere Bedienelemente ersetzt werden können, sofern diese zumindest teilweise Aufgaben mittels ihrer Eigenschaften erfüllen, wozu beispielsweise das Selektieren und Aktivieren einer auf der Anzeigenfläche angezeigten Information und/oder das Bewegen von Seiten und/oder zumindest die Möglichkeit, eine erste Information auf der Anzeigenfläche anzuzeigen und/oder eine erste bereits angezeigte Information z.B. durch Deaktivieren einer Aktivierungssperre (ES) zur Bedienung über irgend eine dafür vorgesehene Eingabe z.B. über Touch- Screen vorzugsweise ebenfalls im seitlichen Greifrandbereich der Anzeige (20) freizugeben. Das aufgezeigte Anschauungsbeispiel lässt offen ob nur reale Bedienelemente und/oder in Kombination mit einer sensitiven Anzeigenfläche und/oder in Kombination mit Sprache bedient wird, da es in erster Linie davon abhängt, wie in späteren Figuren gezeigt, wie die Eigenschaften des Anzeigemittels geplant ist, z.B. als Touch-Screen oder als reines Anzeigendisplay. Grundsätzlich können auch andere Bedienelemente an anderer Stelle der Anzeigeneinheit angebracht sein ohne den Schutzumfang zu beeinflussen. Die Bedienelemente sind in unterschiedlicher Ausführung und Anordnung vorgesehen. Das Bedienfeld kann beispielsweise auch mit Slide-Pad und/oder Track-Ball und/oder einer Mehrfunktionstaste etc. ausgestattet sein oder die entsprechenden Tastenfelder als Induktionsfelder bzw. Schalter ausgebildet sein.

Eine weitere optimierte Benutzerschnittstelle, zur einfachen Bedienung durch den Laienanwender, und zur Reduzierung von irritierenden technischen Informationen, ist eine oder mehrere sensitiv ausgebildete Anzeigefläche(n) über die mittels Berühren einer beliebigen jedoch vorher festgelegten Stelle, eine erste Bedieninformation einer unsichtbaren Funktionsauswahl bzw. Bedieninformation bereitgestellt, d.h. angezeigt wird, die weiter zu bedienen sind. Dies geschieht vorzugsweise mittels Identifizierung einer Funktionsauswahl bzw. anzuzeigenden Funktionsgruppe über eine festgelegte Positionsinformation (60'V), welche beispielsweise eine erste Ecke der Anzeigenfläche bietet und/oder eine mittlere Seite der Anzeigenfläche. Vorzugsweise ist vorgesehen eine Vielzahl irritierender und störender Funktionen bzw. Bedieninformationen welche auf der Anzeigenfläche zur Bedienung dargestellt werden sollen, im normalen Lesemodus ausgeblendet bzw. unsichtbar zu halten und nur bei Bedarf entsprechende Funktions- bzw. Bedieninformationen zur Verfügung zu stellen, wobei entweder alle Funktionen auf einmal oder eine Funktionsgruppe getrennt von zumindest einer weiteren Funktionsgruppe sichtbar gemacht, d.h. bereitgestellt werden kann, um diese zu bedienen. Der Vorteil ist eine irritationsfreie bzw. ungestörte angezeigte Dokumentenseite ähnlich eines Buches (Anschauungsbeispiele bieten die Figuren 19,20,21) Eine weitere vorteilhafte Weiterbildung, jedoch nicht dadurch beschränkt, welche das Einrichten von Funktions- bzw. Bedieninformationen durch ein initialisiertes Dokument bewirkt, ergibt die Möglichkeit die Anzeigenfläche in Bereiche zu teilen, die es dem Laienanwender ermöglicht hinsichtlich spezieller Funktionen der angezeigten Publikation, eine sinnvolle Bedienung vorzunehmen, wenn z.B. ein gekoppelter Speicher mit Dokumenteninformationen (50') alle zur Bedienung dieses Dokumentes notwendigen Funktionen bzw.

Bedieninformationen in der Anzeigeeinheit an der Stelle unsichtbar zur Verfügung stellt, an der sich der gekoppelte Speicher befindet. So hat der Laienanwender die Möglichkeit, nur die Bedieninformationen anzufordern, die unmittelbar mit dem initialisierten Dokument in Verbindung stehen.

Eine weitere optimierte Benutzerschnittstelle, zur einfachen Bedienung durch den Laienanwender, und zur Reduzierung von irritierenden technischen Informationen, ist zumindest eine erste im oberen Teil des Digitalen Buches vorgesehene Festkörperkopplungsvorrichtung (50), vorzugsweise für eine Speicherkarte (50'), jedoch nicht darauf beschränkt, welche mittels Kopplung vorzugsweise durch Einschieben des Festkörperelementes einen oder mehrere Prozesse im digitalen Buch auslöst, die eine Bedienung von Seiten eines Laien insofern erleichtert, dass z.B. der Inhalt des gekoppelten Festkörpers ohne weiteres Zutun des Anwenders bestrebt ist, die Aufgabe des, mit beispielsweise Einschieben des Körpers (50') in die dazu ausgebildete Aufnahmeöffnung (50), bezweckten Vorhabens auszuführen.

Beispielsweise wird der Inhalt einer Speicherkarte mit Buchinformationen ohne weitere Handlung durch den Anwender nach erfolgreicher Koppelung angezeigt, oder zumindest eine erste Information zur Verfügung gestellt die vom Anwender nur verifiziert werden muß (Fig 24). Die dazu notwendige Aufforderung zur Initialisierung kommt dabei vorzugsweise vom digitalen Buch, nach Identifizierung des gekoppelten Festkörpers. Hierzu kann die bereits bekannte Plug- and Play- Technologie eingesetzt werden, um die Erkennung des Festkörpers zu gewährleisten (Siehe dazu auch Figur 22 oder Figur 23).

Eine weitere vorteilhafte Einrichtung zur einfachen Bedienung mittels Kopplung eines oder mehrerer Festkörper mit dem erfindungsgemäßen digitalen Buch, jedoch nicht darauf beschränkt, ist, dass diese Festkörperelemente Software- und/oder Hardwarebestandteile wie z.B. Elektronik (integrierte Schaltkreise, Batterie, Speicher, Sender und/oder Empfänger für kabellose Informationsübertragung, etc.) enthalten, die in irgend einer Form in vorgenannter Art, vorzugsweise ohne weiteres zutun des Anwenders, das Leistungsspektrum hinsichtlich der anzuzeigenden Information, welche über das Festkörpermittel in das digitale Buch gelangt, erweitert und/oder Bedienfunktionen übernimmt, die der Anwender durch eine fehlende alphanumerische Tastatur nicht oder nur eingeschränkt ausführen kann. Eine weitere vorteilhafte Einrichtung zur einfachen Bedienung mittels Kopplung eines oder mehrerer Festkörper mit dem erfindungsgemäßen digitalen Buch, jedoch nicht darauf beschränkt, ist die mit der Kopplung eines Festkörperspeichers mit dem digitalen Buch bewirkte selbsttätige Einrichten und/oder Einstellen des Digitalen Buches beispielsweise durch die Programmierung der Funktionstasten des digitalen Buches zur optimalen Bedienung des auf dem Festkörperspeicher gespeicherten Dokumentes (Fig. 22) und der entsprechenden Bedieninformationen und/oder beispielsweise das automatische Umschalten von einem Anzeigegetrennt-Betriebsmodus in einen Anzeigeverbund-Betriebsmodus und umgekehrt, vorzugsweise selbsttätig durch Koppeln und/oder Entkoppeln eines ersten und/oder zweiten Festkörperspeichers mit anzuzeigenden Dokumenteninformationen (Fig. 23)

Eine weitere optimierte Benutzerschnittstelle, zur einfachen Bedienung durch den Laienanwender, und zur Reduzierung von irritierenden technischen Informationen, ist die Kopplung mittels Kabelverbindern über vorzugsweise nur eine Schnittstelle auf der unteren Seite des digitalen Buches (70'), vorzugsweise im Buchdrehgelenk bei zweiteiligen oder mehrteiligen Anzeigeteilen, welche bei einteiligen Anzeigenteilen der Haltegriff ist, zum Aufnehmen beispielsweise eines Klinkensteckers (70'). Dieses hat den Vorteil das die Schnittstelle robust, und unkompliziert zu bedienen ist, und die für den Kontakt notwendigen Kontaktstellen auf beliebiger Länge des Klinkensteckers untergebracht werden können, da der Einschub nicht durch die konstruktionsbedingte bauliche Tiefe des digitalen Buches behindert wird. Die vorzugsweise nur eine Schnittstelle ist derart ausgebildet, dass die Elektronik des digitalen Buches mittels Signale zur Übertragung von Daten beispielsweise bidirektional und seriell und/oder energiewirksam mit unterschiedlichsten Geräten, Einrichtungen oder Vorrichtungen verbunden werden kann. Hierzu können unterschiedliche Peripheriegeräte gekoppelt werden, wie z.B. Drucker und/oder Telefon und/oder Modem und/oder PCs und/oder Laptops und/oder Ladegeräte welche nur beispielhaft sind. Hierzu braucht der Laienanwender lediglich das entsprechende Kabelverbinder einzustecken und eventuell soweit vorgesehen zu arretieren. Eine weiter Funktion dieser Schnittstelle ist die Aufnahme des Führungs- und Versorgungsstiftes der Buchstation, welche die Aufgabe hat das digitale Buch mit Energie und/oder Dateninformationen zu versorgen, welches beispielsweise je nach Ausführungsform an der Buchstation oder im digitalen Buch einzustellen ist. Gleichermaßen dient dieser Versorgungsstecker als Stabilisierungsstift (Fig. 5/7) des hochkant aufzusteckenden digitalen Buches, als zweiteilig ausgebildetes Buch im geschlossenen Zustand und/oder als einteiliges Buch über die im Haltegriff integrierte Schnittstelle im offenen Zustand (nicht gezeigt).

Fig. 12 zeigt die Darstellung unterschiedlicher Erscheinungsformen des erfindungsgemäßen digitalen Buches, jedoch nicht darauf beschränkt, als ein- oder mehrteiliger, festverbundene oder Anzeigenteile-koppelbare Ausführung.

Fig. 13 zeigt die dem erfindungsgemäßen digitalen Buch zu Grunde liegenden Teilaspekte zur Optimierung d.h. zur Vereinfachung der Bedienung bei gleichzeitiger Reduzierung von irritierenden Informationen und/oder technischen Ausbildungen.

Durch die Bündelung der Aufgaben und der entsprechenden auf einen Bereich konzentrierten Eingabemöglichkeiten

Es sind zwei Teilbereiche 1 und 2 gezeigt die die entscheidenden Aspekte der Erfindung welche im Zusammenhang stehen, aber auch jeweils getrennt voneinander eine entscheidende Rolle spielen.

Ausgehend von einem Anschauungsbeispiel, eines aufgeschlagenen digitalen Buches auf der linken Seite der Fig. 13, welches die Manipulation angezeigter Informationen mittels einem Cursor zeigt, sind im Bereich 1 der Fig. 13 alle Teilaspekte die gemeinsam und/oder getrennt voneinander eine entscheidende Rolle zur Vereinfachung der Bedienung des digitalen Buches stehen aufgezeigt. Dazu gehören die Reduzierung des Bedienaufwandes und der Bedieninformation über die Möglichkeit der Bedienfeld- bzw. Tastenprogrammierung 60TPr eines initialisierten Dokumentes Doc , welches vorzugsweise beim Koppeln des informationstragenden Festkörperspeichers 50 selbsttätig ausgeführt wird 1a.

Ein weitere Aspekt 1 b ist die Reduzierung des Bedienaufwandes und der Bedieninformation durch die Kombination von Eingabemöglichkeiten wie beispielsweise reale Bedienelemente 60, welche mit virtuellen Bedienelementen 60'und 60'V und/oder mit Spracheingabe SpE, wobei die realen Bedienelemente vorzugsweise mit sich selbst zu kombinieren sind, wodurch sich ebenfalls die Anzahl der benötigten Bedienelemente reduzieren läßt. In dem Anschauungsbeispiel werden drei Tasten verwendet 60, mit denen auf vorgenannte Art eine Vielzahl von Funktionen ausführt werden können. Eine weitere Optimierung der Bedienfunktion ist die Verteilung der Bedienelemente auf die Finger der Anzeigemittel haltenden Hand 1 b 1, 2, 3, 4, 5 derart, dass vorzugsweise Zeigefinger 1 Mittelfinger 2 und Ringfinger 3 die Funktionstasten bedienen, was eine wesentlich schnellere Bedienung ermöglicht, während der kleine Finger zur Arretierung des Anzeigenteils dient und der Daumen frei beweglich ist um gegebenenfalls in Kombination mit Sprache und/oder mit den realen Bedienelementen oder für sich allein eine Bedienung der virtuellen Bedienelemente, dass heißt auf der Anzeigenfläche dargestellte Eingabeelemente 60' bedienen kann. Hierzu sind die realen Bedienelemente 60 vorzugsweise auf der Rückseite einer Anzeigenfläche angeordnet.

Eine weitere Optimierung der Bedienfunktionen 1 c ist die komprimierte Anordnung der Bedienelemente AB auf einen Bereich FBh, der beim Halten der Anzeige von den Fingern bedient werden kann, wobei der Bereich vorzugsweise der Bereich im seitlichen Greifrandbereich ist wo sich die anzeigehaltende Hand am häufigsten aufhält, d.h. unter ergonomischen Gesichtspunkten im mittleren Bereich einer Anzeigenseite, da diese Stelle am ausgewogensten zum Halten der Anzeigeeinheit ist und in Bezug auf die Links- oder Rechtshänderbedienung am neutralsten zu Bedienen ist.

Ausgehend von einem weiteren Anschauungsbeispiel, bei der sich ein aufgeschlagenes digitales Buch auf der rechten Seite der Fig. 13, bei dem keine Bedienelemente zu sehen sind, sind im Bereich 2 der Fig.13 alle Teilaspekte der gemeinsam und/oder getrennt voneinander eine entscheidende Rolle zur Reduzierung der beim Lesen eines Dokumentes störenden bzw. irritierenden Elemente aufgezeigt.

Dazu gehören die der realen Bedienelemente 60 auf ein notwendiges Minimum und/oder das Verbergen von Bedienelementen 60h z.B. auf die der Anzeigenseite abgewandten Seite der Anzeigeneinheit 2b.In Fig. 2b wird das Verbergen von virtuellen, d.h. über die Anzeigenfläche zu bedienenden Manipulationselementen d.h. Funktionselementen 60'aufgezeigt, die erst bei Bedarf gemeinsam oder getrennt voneinander sichtbar gemacht werden, derart das keine erste Funktionsinformation zur Identifizierung z.B. einer Menüauswahl bereitsteht, und nur die Lage einer ersten Eingabemöglichkeit 60'EF relativ zur Anzeigenfläche eine Orientierung liefert, was für Funktionen bereitzustellen sind. vorzugsweise dienen zur Orientierung die Ecken 60'EF oder mittleren Seiten (nicht angezeigt) der Anzeigenfläche.

In **Fig. 2b** wird weiterhin ein Aktivierungsschutzfeld 60ES gezeigt, welches eine versehentliche Aktivierung einer einer angezeigten oder nicht angezeigten Funktion 60' im Greifrandbereich vermeidet. Hierzu wird mittels einer Eingabe über z.B. Sprache SpE oder einem realen Bedienelement 60', 60 oder einer anderen Stelle auf der Anzeigenfläche beispielsweise eine Ecke 60MSF der Eingabeschutz aufgehoben um eine Funktion ausführen zu können. Eine weitere Möglichkeit der Reduzierung störender Elemente 2c bezieht sich auf bereits bereitgestellte Bedien- bzw. Funktionsinformationen, die zur Vermeidung von Irritation eines angezeigten Dokumentes in einem Rand oder einem Rahmen neben dem angezeigten Dokument, ähnlich dem Buchrand oder dem Passepartout eines Bildes neben den Dokument 60FR befinden.

Die auf einen bestimmten Bereich konzentrierte Bedienung mit vorzugsweise rückseitigen oder seitlichen Kombinationstasten welche vorteilhafterweise nicht mehr wie drei voneinander getrennte Bedienelemente sein sollten, jedoch nicht darauf beschränkt, ist eine bessere Verteilung einer Vielzahl von Aufgaben und die damit verbunden Funktionen unter Berücksichtigung einer möglichst ruhigen bzw. entspannten Haltung bei Tragen bzw. Halten der Anzeigeeinheit gegeben.

**Fig. 14** zeigt am Beispiel eines aufgeschlagenen, zweiteiligen erfindungsgemäßen digitalen Buches, jedoch nicht darauf beschränkt, eine Bereitstellung von Bedieninformationen und deren Weiterbedienung mittels der Anzeigenfläche abgewandten Bedienelemente und/oder mittels der Eingabe über eine sensitive Eingabefläche, und die Bereitstellung einer ersten Funktionsinformation sowie Weiterbedienung über die sensitive Eingabefläche.

**Fig. 15** zeigt Funktionsmöglichkeiten einer Minimalkonfiguration von Bedienelementen des erfindungsgemäßen digitalen Buches, mit einer ersten Funktion zur Ausführung einer ersten Aufgabe, am Beispiel des Bereitstellens einer Auswahlinformation auf der Anzeigefläche und der nach der ersten Bedienung folgenden selbsttätigen und softwaregesteuerten Umprogrammierung der Bedienelemente zur Erfüllung einer zweiten Aufgabe, z.B. dem Selektieren und/oder Aktivieren einer ausgewählten Funktion oder dem Ausschalten der Bereitstellung.

**Fig. 16** zeigt die generelle Kombinationsmöglichkeit eines Eingabefeldes des erfindungsgemäßen digitalen Buches, am Beispiel von drei realen Bedienelementen und deren Programmierung hinsichtlich einer ersten Funktion und durch Kombinationsbedienung möglichen weiteren ersten Funktionen, sowie der selbsttätigen softwaregesteuerten Umprogrammierung der Bedienelemente durch einen ersten Bedienschritt, zur Erfüllung einer anderen Aufgabe in einem zweiten Bedienungsschritt.

**Fig. 17** zeigt am Beispiel eines ein-/ und zweiteiligen Anzeigenteils des erfindungsgemäßen digitalen Buches, die Programmierung der vorzugsweise rückseitig angeordneten, drei Bedienelemente für ein digitales Buch, bei welchem eine Bedienung nur über reale Bedienelemente bewerkstelligt wird.

**Fig. 18** zeigt am Beispiel eines ein-/ und zweiteiligen Anzeigenteils, mit einer zusätzlichen Möglichkeit der Eingabe über die Anzeigenfläche (Touchscreen), die Programmierung der vorzugsweise rückseitig angeordneten, drei Bedienelemente für ein digitales Buch, bei welchem die realen Bedienelemente in einer ersten Funktion die Bereitstellung von Bedieninformationen auf der Anzeigenfläche realisiert, zur anschließenden Weiterbearbeitungs- bzw. Bedienungsmöglichkeit über eine sensitive Anzeigenfläche.

**Fig. 19** zeigt am Beispiel eines ein- / und zweiteiligen Anzeigenteils, die Programmierung der vorzugsweise rückseitig angeordneten, drei Bedienelemente für ein digitales Buch, als Schnellfunktions-Bedienelemente für häufige Routineoperationen am Beispiel einer ersten Funktion einfach zu betätigenden Bedienelemente, beispielsweise zum Bewegen der Seiten innerhalb eines Buchdokumentes, und die Bearbeitung von nicht so häufig gebrauchten Funktionen über die Anzeigenfläche, wobei diese über das Berühren einer Stelle in der Anzeigenfläche bereitgestellt werden, und beispielsweise durch die Initialisierung eines gekoppelten Buchdokumentes programmiert sind.

**Fig. 20** zeigt am Beispiel einer in der Anzeigenfläche angezeigten Eck- und mittleren Seitenfunktion ein Ausführungsbeispiel der Figur 19 wobei zusätzlich die Seitenrandoperationen im Greifrandbereich der Anzeigeneinheit in einem Dokumentenrand und/oder Rahmen realisiert werden um ein angezeigtes Dokument nicht zu irritieren bzw. zu stören.

**Fig. 21** zeigt am Beispiel zwei in der Anzeigenfläche angezeigten Eckfunktionen ein Ausführungsbeispiel der Figur 19 wobei zusätzlich die Seitenrandoperationen im Greifrandbereich der Anzeigeneinheit in einem Dokumentenrand und/oder Rahmen realisiert werden um ein angezeigtes Dokument nicht zu irritieren bzw. zu stören.

**Fig. 22** zeigt am Beispiel einer einteiligen Ausführungsform der vorliegenden Erfindung die selbsttätige und softwaregesteuerte Programmierung von Bedienelementen und damit verbundene Veränderung der angezeigten Bedieninformationen durch ein gekoppeltes Speichermedium bzw. initialisiertes Dokument.

**Fig. 23** zeigt am Beispiel einer zweiteiligen Ausführungsform der vorliegenden Erfindung das selbsttätige automatische Umschalten eines Anzeige-Verbundbetriebsmodus beim Koppeln eines zweiten Buchdokumentes mit dem digitalen Buch in einen Anzeige-Getrenntbetriebsmodus mit entsprechender Darstellung des Dokumentes auf der Anzeigenfläche sowie den mit einem umgekehrten Vorgang verbundenen selbsttätigen Umschalten von einem Anzeige-Getrenntbetriebsmodus in einen Anzeige-Verbundbetriebsmodus

**Fig. 24** zeigt am Beispiel einer zweiteiligen Ausführungsform des erfindungsgemäßen digitalen Buches, der mit dem Koppeln eines Festkörperspeichers verbundene selbsttätige Ein- und/oder Ausschaltprozess des digitalen Buches, sowie die durch das Koppeln des Festkörpers automatische bewirkte Bestrebung den Inhalt des Festkörpers einzurichten und/oder anzuzeigen.

**Fig. 25** zeigt am Beispiel einer zweiteiligen Ausführungsform des erfindungsgemäßen digitalen Buches, die Kopplungsmöglichkeit unterschiedliche externer Geräte oder Einrichtungen über eine an der Unterseite des digitalen Buches angebrachte Multifunktionsschnittstelle, welche als Schnittstelle für Kabelverbinder und/oder der Versorgungsstation ausgelegt ist

**Fig. 26** zeigt beispielhaft, eine Hardware Kopplungs- und Entkopplungsmöglichkeit mittels Auf- oder Abstecken unterschiedlicher Hardwareteilen über das Drehgelenk eines zweiteiligen digitalen Buches welche beim Abstecken eines Teiles, der Haltegriff eines einteiligen digitalen Buches ist in der Elektronik untergebracht ist

**Fig. 26a** zeigt am Beispiel einer einteiligen Ausgangsbasis die in Fig. 26 beschriebene Ankopplung eines beispielhaften Haltegriffs oder eines Buchdeckels aus irgendeinem Material welches beispielsweise flexibel gezeigt ist oder die Ankopplung einer Laptoptastatur oder einer Kartenstation.

**Fig. 27** zeigt die ergonomische Formgebung der vorliegenden Erfindung mit der dadurch erzeugten kompakten Bauweise und der verbesserten Halte- und Bedienmöglichkeit, sowohl eines einteiligen wie eines mehrteiligen digitalen Buches.

**Fig. 28** zeigt ein flexibel ausgebildetes erfindungsgemäßes digitales Buch am Beispiel eines Anzeigenteiles, und deren flexible Ausbildung zumindest des Anzeigefläche umfassenden Körpers bzw. Gehäuse als Beispiel einer druckkompressiblen Möglichkeit durch z.B. Verwendung eines elektronikummantelndes Schaumstoffgehäuse

**Fig. 29** zeigt ein flexibel ausgebildetes erfindungsgemäßes digitales Buch am Beispiel eines Anzeigenteiles, und deren flexible Ausbildung von Anzeigefläche und Gehäuse als Beispiel einer zumindest teilbiegsamen Möglichkeit durch Verspannen eines z.B. Polymer-Displays in einem Gehäuserahmen an zwei Seiten.

**Fig. 30** zeigt mehrere flexibel ausgebildete erfindungsgemäße digitale Bücher am Beispiel von ein oder zwei Anzeigenteilen mit Bedienmöglichkeit, bei der beispielsweise ein oder mehrere Polymer-Display(s) in zumindest teiltransparentem Kunstoff- oder kunststoffähnlichem Material zur Festigung verklebt sind.

Wie bereits beschrieben, ist der Nebenteil 2 oder sind die Nebenteile 2a, 2b derart ausgebildet, dass er/sie von dem Hauptteil 1 elektrisch und/oder mechanisch trennbar ist/ sind, so dass der Hauptteil 1 für sich allein benutzbar ist. Die zumindest eine Bedienungseinheit 6 enthält als die Bedienungselemente Richtungstasten und Funktionstasten, die für verschiedenartige Funktionen einzeln oder in Kombination zu betätigen sind.

Die Anzeigeeinheit D kann vorteilhafter Weise eine Funktion zum Anzeigen des Stromversorgungsstatus, vorzugsweise auf dem Bildschirm des Haupt-Teils 1, aufweisen.

Der Bildschirm 3 oder die Bildschirme 3, 4 der Anzeigeeinheit D ist/sind vorzugsweise flexibel ausgebildet, was auch für das Gehäuse gilt, so dass das digitale Buch wie ein Notizbuch, beispielsweise in einer Innentasche einer Jacke, mitgeführt werden kann. Für den Bildschirm 3 oder die Bildschirme 3, 4 kann vorteilhafter Weise eine regelbare Hintergrundbeleuchtung vorgesehen sein. Die Anzeige auf dem Bildschirm 3 oder den Bildschirmen 3, 4 sowie die Hintergrundbeleuchtung können selbsttätig mit dem Auf- oder Zuklappen des Gehäuses ein- oder ausschaltbar sein.

Das Gehäuse kann mit einer Haltevorrichtung (nicht gezeigt) zum Aufnehmen des Bildschirmstiftes 15 zur Benutzung als Betäfigungs-, Beschriftungs-, Skizzier- und/oder Bearbeitungswerkzeug versehen sein.

## Patentansprüche

1. Anzeigevorrichtung, insbesondere zur Wiedergabe von Text und/oder Bildinformationen, umfassend
ein Gehäuse mit einem Hauptteil (1) und zumindest einem Nebenteil (2), wobei der Hauptteil und der zumindest eine Nebenteil derart angeordnet sind, dass das Gehäuse buchartig um eine Klappachse (A) eines Drehgelenks auf- und zuklappbar ist,
eine Anzeigeeinheit mit mindestens einem Bildschirm (3, 4),
**dadurch gekennzeichnet, dass**
im Drehgelenk eine Schnittstelle zur Stromversorgung und/oder zur Übertragung von Datensignalen von oder zu anderen Informationsverarbeitungssystemen angeordnet ist, wobei die Schnittstelle in Form einer elektrischen Steckverbindung ausgebildet ist.

2. Anzeigevorrichtung nach Anspruch 1, wobei die Schnittstelle im Bereich einer Seite, insbesondere der Unterseite, des Drehgelenks angeordnet ist.

3. Anzeigevorrichtung nach Anspruch 1 oder 2, wobei die Schnittstelle zur bidirektionalen und/oder seriellen Übertragung von Datensignalen ausgebildet ist.

4. Anzeigevorrichtung nach einem der vorangegangenen Ansprüche, wobei die Schnittstelle eine Führungs- und Versorgungsöffnung (7') aufweist.

5. Anzeigevorrichtung nach Anspruch 4, wobei die Führungs- und Versorgungsöffnung Gegenkontakte (8') für die Stromzuführung und/oder Gegenkontakte (9') für die Zu- und Abführung von Information aufweist.

6. Anzeigevorrichtung nach Anspruch 4 oder 5, wobei die Führungs- und Versorgungsöffnung zylindrisch derart ausgebildet ist, dass die Längsachse der Führungs- und Versorgungsöffnung koaxial zu der Klappachse liegt.

7. Anzeigevorrichtung nach einem der vorangegangenen Ansprüche, wobei die Schnittstelle zur Aufnahme eines Klinkensteckers ausgebildet ist.

8. Anzeigevorrichtung nach einem der vorangegangenen Ansprüche, weiterhin umfassend eine Steuereinheit (10) mit Mitteln zur Aufnahme, Speicherung, Verarbeitung und Wiedergabe von Informationen.

9. Anzeigevorrichtung nach einem der vorangegangenen Ansprüche, weiterhin umfassend zumindest eine Bedienungseinheit (6) mit Bedienungselementen zur Benutzung der Anzeigevorrichtung als Informationsaufnahme-/-bearbeitungs-/-wiedergabeeinrichtung.

10. Anzeigevorrichtung nach Anspruch 9, wobei die Bedienungselemente Kombinationstastenelemente umfassen, die insbesondere im Greifrandbereich angeordnet sind.

11. Anzeigevorrichtung nach einem der vorangegangenen Ansprüche, wobei der Hauptteil und der zumindest eine Nebenteil mechanisch und/oder elektrisch trennbar miteinander verbunden sind.

12. Anzeigevorrichtung nach einem der Ansprüche 1-10, wobei der Hauptteil und der zumindest eine Nebenteil fest miteinander verbunden sind, ohne dass vorgesehen ist, die Teile voneinander trennen zu können.

13. Anzeigevorrichtung nach einem der vorangegangenen Ansprüche, wobei die Anzeigeeinheit zumindest zweiteilig ausgebildet und derart angeordnet ist, dass der Hauptteil mit zumindest einem Bildschirm und der zumindest eine Nebenteil mit zumindest einem Bildschirm im aufgeklappten Zustand des Gehäuses dem Benutzer wie Seiten eines Buches zur Ansicht zur Verfügung stehen.

14. Anzeigevorrichtung nach einem der vorangegangenen Ansprüche, wobei der Hauptteil und der zumindest eine Nebenteil einen Buchrückenteil (BR) bilden, der zur Aufnahme einer, insbesondere wiederaufladbaren, Batterie (B) zur Stromversorgung ausgebildet ist.

15. Anzeigevorrichtung nach Anspruch 14, wobei der Buchrückenteil das Drehgelenk umfasst und das Drehgelenk zur Aufnahme der Batterie ausgebildet ist.

16. Anzeigevorrichtung nach Anspruch 15, wobei das Drehgelenk zur Aufnahme einer zylinderförmigen Batterie derart ausgebildet ist, dass die Längsachse der Batterie koaxial zur Klappachse liegt.

17. Anzeigevorrichtung nach einem der vorangegangenen Ansprüche, wobei die Steckverbindung als Haltevorrichtung zum Aufstellen der Anzeigevorrichtung in einer Versorgungseinheit (VE) ausgebildet ist.

18. System umfassend
eine Anzeigevorrichtung nach einem der vorangegangenen Ansprüche und
eine Versorgungseinheit (VE) mit einer Aufnahmeöffnung (VE') und einem Führungs- und Versorgungsstift (7),
wobei die Anzeigevorrichtung im zugeklappten Zustand des Gehäuses zur Zu- und Abführung von Information, zur Zuführung von Energie und zur Aufbewahrung der Anzeigevorrichtung mittels des Führungs- und Versorgungsstifts einsteckbar ist.

## Claims

1. A display device, in particular for displaying text and/or image information, comprising:
a casing with a main part (1) and at least one secondary part (2), wherein said main part and said at least one secondary part are arranged such that said casing can be folded open and shut about a folding axis (A) of a swivel joint like a book,
a display unit with at least one screen (3, 4),
**characterized in that**
an interface for current supplying and/or for transmitting data signals from or to other information processing systems is arranged within said swivel joint, wherein said interface has the form of an electrical connector.

2. The display device according to claim 1, wherein said interface is arranged at a side, in particular the underside, of said swivel joint.

3. The display device according to claim 1 or 2, wherein said interface is configured for bi-directional and/or serial transmission of data signals.

4. The display device according to any one of the preceding claims, wherein said interface comprises a guiding and supplying opening (7').

5. The display device according to claim 4, wherein said guiding and supplying opening comprises counter-contacts (8') for current supply and/or counter-contacts (9') for supplying and leading away information.

6. The display device according to claim 4 or 5, wherein said guiding and supplying opening is configured cylindrically such that the longitudinal axis of the guiding and supplying opening is arranged co-axially to said folding axis.

7. The display device according to any one of the preceding claims, wherein said interface is configured to accommodate a phone jack.

8. The display device according to any one of the preceding claims, further comprising a control unit (10) with means for recording, storing, processing and reproducing information.

9. The display device according to any one of the preceding claims, further comprising at least one operating unit (6) with operating elements for using said display device as device for recording, processing and/or reproducing information.

10. The display device according to claim 9, wherein said operating elements are combination key elements, in particular being arranged in a grasp border region.

11. The display device according to any one of the preceding claims, wherein said main part and said at least one secondary part are mechanically and/or electrically detachably connected to each other.

12. The display device according to any one of claims 1 to 10, wherein said main part and said at least one secondary part are firmly connected to each other without it being intended that said parts are separable from each other.

13. The display device according to any one of the preceding claims, wherein said display unit is provided at least in two-part form and is arranged such that, in a folded open state of said casing, said main part with at least one screen and said at least one secondary part with at least one screen are provided to a user to be viewed like the pages of the book.

14. The display device according to any one of the preceding claims, wherein said main part and said at least one secondary part form a spine part (BR) which is adapted to accommodate a battery (B), particularly a re-chargeable battery (B), for current supply.

15. The display device according to claim 14, wherein said spine part comprises said swivel joint, and said swivel joint is adapted to accommodate the battery.

16. The display device according to claim 15, wherein said swivel joint is adapted to accommodate a cylindrical battery in such a way that the longitudinal axis of said battery is arranged co-axially to said folding axis.

17. The display device according to any one of the preceding claims, wherein said connector is configured as a holding device for arranging the display device in a supply unit (VE).

18. A system comprising
a display device according to any one of the preceding claims, and
a supply unit (VE) with a reception opening (VE') and a guiding and supplying pin (7),
wherein said display device in a folding shut state of the casing can be inserted by means of said guiding and supplying pin for supplying and leading away information, for supplying energy, and for keeping the display device.

## Revendications

1. Dispositif d'affichage, destiné en particulier à reproduire un texte et/ou des informations d'image, comportant
un boîtier doté d'une partie principale (1) et au moins d'une partie secondaire (2), la partie principale et la au moins une partie secondaire étant disposées de telle sorte que le boîtier peut être ouvert et fermé à la façon d'un livre autour d'un axe de pliage (A) d'une articulation rotative,
une unité d'affichage comprenant au moins un écran (3, 4),
**caractérisé en ce que**
une interface destinée à l'alimentation en courant et/ou au transfert de signaux de données provenant ou à destination d'autres systèmes de traitement d'informations est disposée dans l'articulation rotative, l'interface prenant la forme d'un connecteur de raccordement électrique.

2. Dispositif d'affichage selon la revendication 1, l'interface étant disposée dans la zone d'un côté, en particulier du côté inférieur, de l'articulation rotative.

3. Dispositif d'affichage selon la revendication 1 ou 2, l'interface étant conçue pour le transfert bidirectionnel et/ou sériel de signaux de données.

4. Dispositif d'affichage selon l'une quelconque des revendications précédentes, l'interface comprenant une ouverture de guidage et d'alimentation (7').

5. Dispositif d'affichage selon la revendication 4, l'ouverture de guidage et d'alimentation comprenant des contre-contacts (8') pour l'amenée de courant et/ou des contre-contacts (9') pour l'amenée et la délivrance d'informations.

6. Dispositif d'affichage selon la revendication 4 ou 5, l'ouverture de guidage et d'alimentation étant conçue de manière cylindrique de telle sorte que l'axe longitudinal de l'ouverture de guidage et d'alimentation se situe de manière coaxiale à l'axe de pliage.

7. Dispositif d'affichage selon l'une quelconque des revendications précédentes, l'interface étant conçue pour recevoir un jack mâle.

8. Dispositif d'affichage selon l'une quelconque des revendications précédentes, comportant en outre une unité de commande (10) dotée de moyens destinés à recevoir, stocker, traiter et reproduire des informations.

9. Dispositif d'affichage selon l'une quelconque des revendications précédentes, comportant en outre au moins une unité de manipulation (6) dotée d'éléments de manipulation destinés à utiliser le dispositif d'affichage comme dispositif de réception/de traitement/de reproduction d'informations.

10. Dispositif d'affichage selon la revendication 9, les éléments de manipulation comportant des éléments de touches de combinaison, qui sont disposés en particulier dans la zone du bord de préhension.

11. Dispositif d'affichage selon l'une quelconque des revendications précédentes, la partie principale et la au moins une partie secondaire étant reliées l'une à l'autre mécaniquement et/ou électriquement de manière séparable.

12. Dispositif d'affichage selon l'une quelconque des revendications 1 à 10, la partie principale et la au moins une partie secondaire étant reliées fixement l'une à l'autre, sans qu'il ne soit prévu de pouvoir séparer les parties l'une de l'autre.

13. Dispositif d'affichage selon l'une quelconque des revendications précédentes, l'unité d'affichage étant conçue au moins en deux parties et disposée de telle sorte que la partie principale comprenant au moins un écran et la au moins une partie secondaire comprenant au moins un écran dans l'état ouvert du boîtier peuvent être vues par l'utilisateur comme les pages d'un livre.

14. Dispositif d'affichage selon l'une quelconque des revendications précédentes, la partie principale et la au moins une partie secondaire forment une partie de dos de livre (BR), qui est conçue pour recevoir une batterie (B) pour l'alimentation en courant, pouvant notamment être rechargée.

15. Dispositif d'affichage selon la revendication 14, la partie de dos du livre comportant l'articulation rotative et l'articulation rotative étant conçue pour recevoir la batterie.

16. Dispositif d'affichage selon la revendication 15, l'articulation rotative destinée à recevoir une batterie cylindrique étant conçue de telle sorte que l'axe longitudinal de la batterie se situe de manière coaxiale à l'axe de pliage.

17. Dispositif d'affichage selon l'une quelconque des revendications précédentes, le connecteur de raccordement étant conçue comme un dispositif de maintien destiné à monter le dispositif d'affichage dans une unité d'alimentation (VE).

18. Système comportant
un dispositif d'affichage selon l'une quelconque des revendications précédentes et
une unité d'alimentation (VE) dotée d'une ouverture de réception (VE') et d'une broche de guidage et d'alimentation (7),
le dispositif d'affichage à l'état fermé du boîtier pouvant être branché pour amener et délivrer les informations, pour amener l'énergie et conserver le dispositif d'affichage au moyen de la broche de guidage et d'alimentation.
